# EUROPEAN PATENT APPLICATION

(11) **EP 4 439 237 A1**
(43) Date of publication of application: **02.10.2024**
(21) Application number: 22898259.1
(22) Date of filing: 12.10.2022
(51) Int. Cl.: G06F 3/01, A63F 13/285

(54) **INFORMATION PROCESSING DEVICE FOR CONTROLLING POSITION OF MOVABLE PART**

(30) Priority: 25.11.2021 JP 2021191248
(71) Applicant: Sony Group Corporation, Tokyo 108-0075 (JP)
(72) Inventor: NAKAGAWA, Yusuke, Tokyo 108-0075 (JP); FUKUMA, Yohei, Tokyo 108-0075 (JP); LIU, Yuhu, Tokyo 108-0075 (JP)
(74) Representative: D Young & Co LLP
(86) International application number: PCT/JP2022/038009
(87) International publication number: WO 2023/095475

(57) **Abstract**

It has been desired to provide a technology capable of presenting more types of senses of force to a user.

Provided is an information processing apparatus including: a first member provided with a first movable part; a second member connected to the first member; a signal acquisition unit that acquires a first control signal for controlling a position of the first movable part; and a position control unit that controls the position of the first movable part in accordance with the first control signal.

## Description

### TECHNICAL FIELD

The present disclosure relates to an information processing apparatus, an information processing method, and a program.

### BACKGROUND ART

In recent years, an apparatus that presents a sense of force to a user has been known (hereinafter, also referred to as a "force sense presentation apparatus"). For example, a force sense presentation apparatus that presents a pseudo sense of force in a curved form by combining translation and rotation is disclosed (see, for example, Patent Document 1).

### CITATION LIST

### PATENT DOCUMENT

Patent Document 1: Japanese Patent Application Laid-Open No. 2012-143054

### SUMMARY OF THE INVENTION

### PROBLEMS TO BE SOLVED BY THE INVENTION

However, it has been desired to provide a technology capable of presenting more types of senses of force to a user.

### SOLUTIONS TO PROBLEMS

According to a certain aspect of the present disclosure, there is provided an information processing apparatus including: a first member provided with a first movable part; a second member connected to the first member; a signal acquisition unit that acquires a first control signal for controlling a position of the first movable part; and a position control unit that controls the position of the first movable part in accordance with the first control signal.

In addition, according to another aspect of the present disclosure, there is provided an information processing method including: acquiring a first control signal for controlling a position of a first movable part provided in a first member connected to a second member; and controlling, by a processor, the position of the first movable part in accordance with the first control signal.

In addition, according to another aspect of the present disclosure, there is provided a program for causing a computer to function as an information processing apparatus including: a signal acquisition unit that acquires a first control signal for controlling a position of a first movable part provided in a first member connected to a second member; and a position control unit that controls the position of the first movable part in accordance with the first control signal.

### BRIEF DESCRIPTION OF DRAWINGS

Fig. 1 is a diagram illustrating a configuration example of an information processing system according to a first embodiment of the present disclosure.
Fig. 2 is a diagram illustrating a functional configuration example of a microcomputer.
Fig. 3 is a diagram schematically illustrating a structure of a controller.
Fig. 4 is a diagram for explaining an example of controlling a position of a movable part according to virtual objects corresponding to the controller.
Fig. 5 is a diagram illustrating an example of presentation of a sense of force to a user based on contact of another virtual object with a virtual object corresponding to the controller.
Fig. 6 is a diagram illustrating another example of presentation of a sense of force to a user based on contact of another virtual object with a virtual object corresponding to the controller.
Fig. 7 is a diagram illustrating an example of presentation of a sense of force to a user.
Fig. 8 is a diagram illustrating another example of presentation of a sense of force to a user.
Fig. 9 is a diagram illustrating another example of presentation of a sense of force to a user.
Fig. 10 is a diagram illustrating an example of a relationship between a position command value for the movable part and a weight of a virtual object corresponding to the controller.
Fig. 11 is a diagram illustrating an example of a relationship between the position command value and the position of the movable part.
Fig. 12 is a diagram illustrating an example of addition of an effect signal.
Fig. 13 is a diagram for explaining an example of presentation of a pseudo sense of force with a nonlinear waveform.
Fig. 14 is a diagram for explaining a modification of a movable range of the movable part.
Fig. 15 is a diagram for explaining another modification of the movable range of the movable part.
Fig. 16 is a diagram illustrating a configuration example of an information processing system according to a second embodiment of the present disclosure.
Fig. 17 is a diagram illustrating a functional configuration example of a microcomputer.
Fig. 18 is a diagram illustrating a usage example of controllers in a case where an angle between the controllers is 90 degrees.
Fig. 19 is a diagram illustrating an example of a relationship between the position command value and positions of two movable parts.
Fig. 20 is a diagram for explaining an example of controlling positions of two movable parts according to a virtual object corresponding to a combination of two controllers.
Fig. 21 is a diagram illustrating a usage example of controllers in a case where an angle between the controllers is zero degrees.
Fig. 22 is a diagram illustrating an example of a relationship between the position command value and positions of two movable parts.
Fig. 23 is a diagram for explaining an example of controlling positions of two movable parts according to a virtual object corresponding to a combination of two controllers.
Fig. 24 is a diagram illustrating a state in which a cap is removed from the controller.
Fig. 25 is a diagram illustrating a connection example of two controllers via a joint.
Fig. 26 is a diagram illustrating an example of direct connection between controllers forming an angle of zero degrees.
Fig. 27 is a diagram illustrating an example of direct connection between controllers forming an angle of 90 degrees.
Fig. 28 is a diagram illustrating a display example of a guidance prompting connection between controllers.
Fig. 29 is a diagram illustrating states of two controllers before and after connection in accordance with the guidance.
Fig. 30 is a diagram illustrating a situation in which four controllers are connected to each other.
Fig. 31 is a diagram illustrating a control example of the movable parts provided in each of four controllers.
Fig. 32 is a diagram illustrating an example in which a controller and an accessory member are connected.
Fig. 33 is a diagram illustrating another example in which a controller and an accessory member are connected.
Fig. 34 is a diagram illustrating an example in which each of two controllers is connected to an accessory member.
Fig. 35 is a diagram illustrating a control example of the movable parts provided in each of two controllers connected to the accessory member.
Fig. 36 is a diagram illustrating an example in which each of two controllers is connected to an accessory member.
Fig. 37 is a diagram illustrating an example of a relationship between the position command value and the position of the movable part.
Fig. 38 is a diagram illustrating an example in which the accessory member is connected to two types of controllers.
Fig. 39 is a diagram for explaining a first modification relating to movement of the movable part.
Fig. 40 is a diagram for explaining a second modification relating to movement of the movable part.
Fig. 41 is a diagram for explaining a third modification relating to movement of the movable part.
Fig. 42 is a diagram for explaining a fourth modification relating to movement of the movable part.
Fig. 43 is a diagram for explaining a first configuration example of the movable part.
Fig. 44 is a diagram for explaining details of the first configuration example of the movable part.
Fig. 45 is a diagram for explaining a second configuration example of the movable part.
Fig. 46 is a diagram for explaining details of the second configuration example of the movable part.
Fig. 47 is a diagram for explaining a third configuration example of the movable part.

### MODE FOR CARRYING OUT THE INVENTION

Hereinafter, preferred embodiments of the present disclosure will be described in detail with reference to the accompanying drawings. Note that, in the present description and the drawings, constituent elements having substantially the same functional configurations will be given the same reference signs, and redundant explanations will be omitted.

In addition, in the present description and the drawings, a plurality of constituent elements having substantially the same or similar functional configurations will be sometimes distinguished by giving different numbers after the same reference signs. However, in a case where it is not particularly necessary to distinguish the plurality of constituent elements having substantially the same or similar functional configurations from each other, only the same reference signs will be given. In addition, similar constituent elements of different embodiments will be sometimes distinguished by giving different alphabets after the same reference signs. However, in a case where it is not particularly necessary to distinguish the similar constituent elements from each other, only the same reference signs will be given.

Note that the description will be given in the following order.
0. Overview
1. First Embodiment
1.1. System Configuration Example
1.2. Example of Position Control for Movable Part
1.3. Contact between Virtual Objects
1.4. Vibration of Voice Coil Motor (VCM)
1.5. Weight Setting for Virtual Object
1.6. Approach of Position Control for Movable Part
1.7. Addition of Effect Signal
1.8. Presentation of Pseudo Sense of Force with Nonlinear Waveform
1.9. Movable Range of Movable Part
2. Second Embodiment
2.1. System Configuration Example
2.2. Case Where Angle between Controllers is 90 Degrees
2.3. Case Where Angle between Controllers is Zero Degrees
2.4. Supplemental Items
2.5. Position Control according to Connection Relationship
2.6. Indirect Connection between Controllers
2.7. Recognition of Connection Relationship
2.8. Direct Connection between Controllers
2.9. Guidance for Prompting Connection between Controllers
3. Various Modifications
3.1. Number of Controllers Connected to Each Other
3.2. Case where Accessory Member is Connected
3.3. Modifications Relating to Movement of Movable Part
3.4. Configuration Examples of Movable Part
4. Summary

### <0. Overview>

First, an overview of embodiments of the present disclosure will be described. In recent years, there are diverse types of force sense presentation apparatuses. As one example of the force sense presentation apparatus, an exoskeleton type force sense presentation apparatus can be mentioned. According to the exoskeleton type force sense presentation apparatus, a sense of grabbing something with a hand in a virtual reality (VR) space can be presented to a user.

As another example of the force sense presentation apparatus, a tool type force sense presentation apparatus (such as a pen type force sense presentation apparatus or a gun type force sense presentation apparatus, as an example) can be mentioned. The tool type force sense presentation apparatus is generally designed by simulating a shape of a specified tool and presents a sense of force suitable for that specified tool to a user. For this reason, in actual circumstances, it is difficult for such a tool type force sense presentation apparatus to present senses of force corresponding to each of a plurality of types of tools to the user.

Thus, in the present description, a tool type force sense presentation apparatus for more general purposes will be mainly proposed. Furthermore, in the present description, a technology of presenting a sense of force to the user with a combination of a plurality of devices will also be proposed. With combinations of a plurality of devices, it is expected that the type of sense of force to be presented to the user be further improved, and it is also expected that senses of force corresponding to more types of tools be presented to the user.

The above is a description of an overview of the embodiments according to the present disclosure.

### <1. First Embodiment>

Next, a first embodiment of the present disclosure will be described in detail.

### (1.1. System Configuration Example)

First, a configuration example of an information processing system according to the first embodiment of the present disclosure will be described.

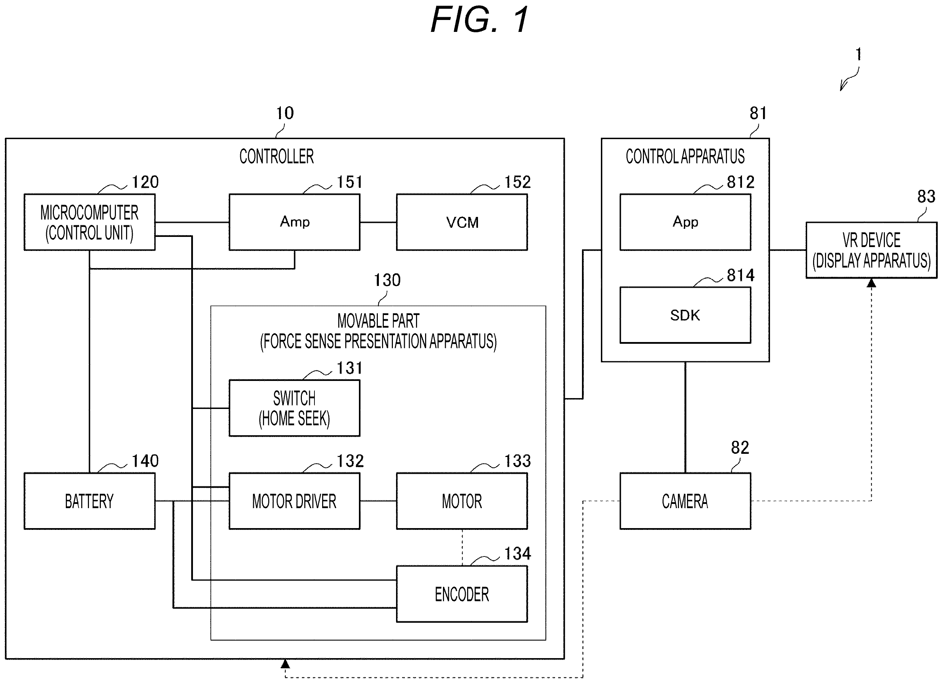

Fig. 1 is a diagram illustrating a configuration example of an information processing system according to the first embodiment of the present disclosure. As illustrated in Fig. 1, an information processing system 1 according to the first embodiment of the present disclosure includes a controller 10 (first member), a control apparatus 81, a camera 82, and a VR device 83 (display apparatus). The control apparatus 81 is connected to each of the controller 10, the camera 82, and the VR device 83 in a wired or wireless manner.

### (Control Apparatus 81)

The control apparatus 81 is implemented by a computer. As illustrated in Fig. 1, the control apparatus 81 holds an application (App) 812 in a storage unit (not illustrated), and a processing unit can be implemented by a processor (not illustrated) executing the App 812. Typically, the App 812 may be a gaming application. However, the type of the App 812 is not limited to the gaming application. For example, the App 812 may be an application other than the gaming application.

The App 812 progresses on the basis of information transmitted from the controller 10, information transmitted from the VR device 83, or an image captured by the camera 82. Then, the App 812 controls output by the VR device 83 on the basis of its own progress. For example, output by the VR device 83 can include screen display by a display apparatus or audio output by a speaker.

Here, the information transmitted from the controller 10 can correspond to operation information for controlling execution of the App 812. For example, the information transmitted from the controller 10 may include information indicating that a button provided in the controller 10 has been pressed, or may include information detected by a sensor provided in the controller 10. Similarly, the information transmitted from the VR device 83 may include information indicating that a button provided in the VR device 83 has been pressed, or may include information detected by a sensor provided in the VR device 83.

In more detail, the App 812 constructs a VR space. In the VR space, an avatar corresponding to the user exists. The App 812 controls the motion of the avatar in the VR space on the basis of information transmitted from the controller 10, information transmitted from the VR device 83, or an image captured by the camera 82. At this time, an image of the VR space is provided to the VR device 83 from the App 812, and the VR space can be visually recognized by the user by being displayed by the VR device 83.

In addition, the App 812 transmits various control signals to the controller 10. Furthermore, the control apparatus 81 holds a software development kit (SDK) 814 in a storage unit (not illustrated). The SDK 814 is a component necessary for execution of the App 812.

Note that, typically, a case where the control apparatus 81 is a game machine can be assumed. However, the control apparatus 81 is not limited to the game machine. For example, the control apparatus 81 may be a personal computer (PC) or the like.

### (Camera 82)

The camera 82 includes an image sensor and obtains an image by capturing an imaging range with the image sensor. In more detail, the camera 82 obtains a plurality of frames (that is, a moving image) by continuously capturing the imaging range along the time series with the image sensor. For example, in the imaging range of the camera 82, the controller 10 and the VR device 83 can exist.

Note that, typically, a case where the camera 82 is installed independently of other apparatuses (such as the controller 10, the control apparatus 81, and the VR device 83, as an example) is assumed. However, the camera 82 may be integrated with another apparatus. For example, the camera 82 may be provided in the VR device 83 or may be provided in the control apparatus 81.

### (VR Device 83)

The VR device 83 performs output under the control of the App 812. For example, the VR device 83 includes a display apparatus and performs screen display with the display apparatus under the control of the App 812. Alternatively, the VR device 83 includes a speaker and performs audio output with the speaker under the control of the App 812.

Note that, typically, the VR device 83 can be used by being worn on the head of the user. However, the VR device 83 does not necessarily have to be worn on the head of the user.

In addition, in the example illustrated in Fig. 1, the mode of the VR device 83 is a mode in which the VR device 83 is connected to the control apparatus 81. However, the mode of the VR device 83 is not limited. For example, the mode of the VR device 83 may be a mode in which a smartphone is set in goggles and used. Alternatively, the mode of the VR device 83 may be a mode in which a headset works alone.

### (Controller 10)

The controller 10 includes a microcomputer 120 (control unit), a movable part 130 (first movable part) as an example of the force sense presentation apparatus, a battery 140, an amplifier (Amp) 151, and a voice coil motor (VCM) 152 as another example of the force sense presentation apparatus.

### (Microcomputer 120)

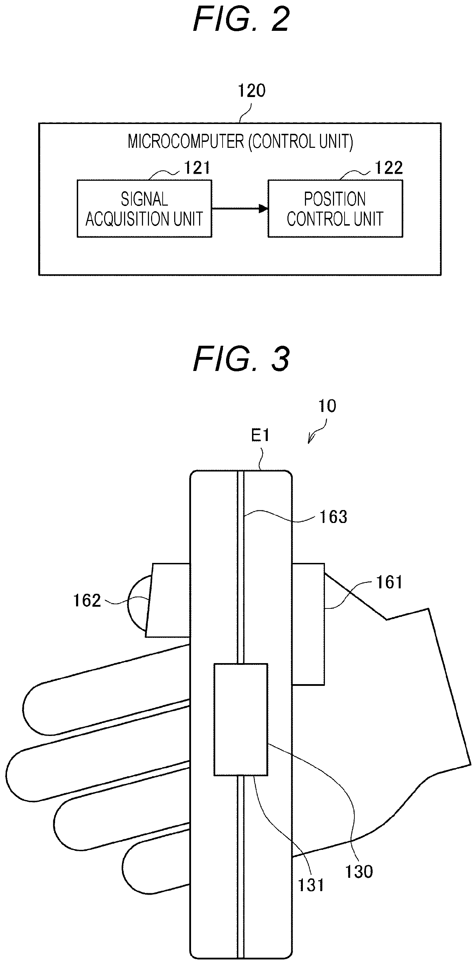

The microcomputer 120 corresponds to a micro-control unit (MCU) and can be constituted by an integrated circuit in which a processor, a memory (recording medium), an input/output circuit, and the like are mounted. The functions that the microcomputer 120 has can be implemented by a processor executing a program stored in a memory. A functional configuration example of the microcomputer 120 will be described with reference to Fig. 2.

Fig. 2 is a diagram illustrating a functional configuration example of the microcomputer 120. As illustrated in Fig. 2, the microcomputer 120 includes a signal acquisition unit 121 and a position control unit 122. Note that the functions that each of the signal acquisition unit 121 and the position control unit 122 has will be described in detail later. Returning to Fig. 1, the description will be continued.

Note that, in a case where a microcomputer exists outside the controller 10, the functions that the microcomputer 120 has may be incorporated in the microcomputer existing outside the controller 10.

### (Movable Part 130)

The movable part 130 includes a home seek switch 131, a motor driver 132, a motor 133, and an encoder 134. Besides, the movable part 130 includes a substrate (not illustrated) on which these components are disposed.

The home seek switch 131 is a switch used to define a reference position of the movable part 130. The motor 133 has a function of converting electrical energy into mechanical energy for moving the movable part 130. The motor driver 132 is a driver that controls the motor 133 in accordance with a command output from the microcomputer 120. The encoder 134 has a function of detecting a rotational speed, a position, and the like of the motor 133 and outputting a detection result to the microcomputer 120.

Fig. 3 is a diagram schematically illustrating a structure of the controller 10. As illustrated in Fig. 3, the controller 10 includes a housing E1. Various buttons 161 and a trigger button 162 are provided on an outer side of the housing E1. The various buttons 161 are disposed at positions that are easily pressed mainly by the thumb, and the trigger button 162 is disposed at a position that is easily pressed mainly by the index finger.

In a case where the various buttons 161 are pressed, information indicating that the various buttons 161 have been pressed is output to the App 812 via the microcomputer 120. Similarly, in a case where the trigger button 162 is pressed, information indicating that the trigger button 162 has been pressed is output to the App 812 via the microcomputer 120.

A drive member 163 is provided on an inner side of the housing E1. For example, the drive member 163 is connected to the movable part 130 and the housing E1 and moves the movable part 130 in a vertical direction of the controller 10, using mechanical energy generated by the motor 133.

At a lower end of the movable part 130, the home seek switch 131 is provided. Therefore, when the movable part 130 moves in a downward direction and comes into contact with the housing E1, the home seek switch 131 is pressed, and the position of the movable part 130 when the home seek switch 131 is pressed is used to define the reference position of the movable part 130.

The position where the home seek switch 131 is provided is not limited. For example, the home seek switch 131 may be provided at an upper end of the movable part 130. At this time, when the movable part 130 moves in an upward direction and comes into contact with the housing E1, the home seek switch 131 is pressed, and the position of the movable part 130 when the home seek switch 131 is pressed is used to define the reference position of the movable part 130.

Note that, as illustrated in Fig. 3, in the embodiment of the present disclosure, a case where the user grabs the controller 10 such that the thumb is positioned above the little finger will be mainly assumed.

Therefore, in the following description, for convenience, a direction in which the thumb is located will be also referred to as an "upward direction of the controller" with a center of a portion of the controller 10 grabbed by the hand of the user as a reference. In addition, for convenience, a direction in which the little finger is located will be also referred to as a "downward direction of the controller" with the center of the portion of the controller 10 grabbed by the hand of the user as a reference. However, how the user grabs the controller 10 is not limited. Returning to Fig. 1, the description will be continued.

### (Battery 140)

The battery 140 supplies electric power to each unit of the controller 10. For example, the battery 140 supplies electric power to each of the microcomputer 120, the Amp 151, the motor driver 132, and the encoder 134. Note that, in the example illustrated in Fig. 1, the battery 140 is provided outside the movable part 130, but as will be also described later, the battery 140 may be included in the movable part 130.

### (Amp151)

The Amp 151 outputs an electric current to the VCM 152 on the basis of an electric current command output from the microcomputer 120.

### (VCM152)

The VCM 152 has a coil and a magnet. A magnetic field is generated by the magnet, and when an electric current output from the Amp 151 flows through the coil, a force according to the magnetic field and the electric current is generated in the coil. This causes the VCM 152 to move in a predetermined direction. Furthermore, when the passage of the electric current flowing through the coil is shifted to a reverse way, the VCM 152 also moves in a reverse way to the predetermined direction. Therefore, the VCM 152 vibrates as the passage of the electric current flowing through the coil is repeatedly changed.

### (1.2. Example of Position Control for Movable Part 130)

Next, an example of position control for the movable part 130 will be described. In the VR space constructed by the App 812 of the control apparatus 81, a virtual object (first virtual object) corresponding to the controller 10 exists. For example, as an example of the virtual object corresponding to the controller 10, virtual objects indicating various tools (such as a tennis racket or a sword, as an example) or the like are assumed. As an example, it can be assumed to control the position of the movable part 130 according to the virtual object corresponding to the controller 10.

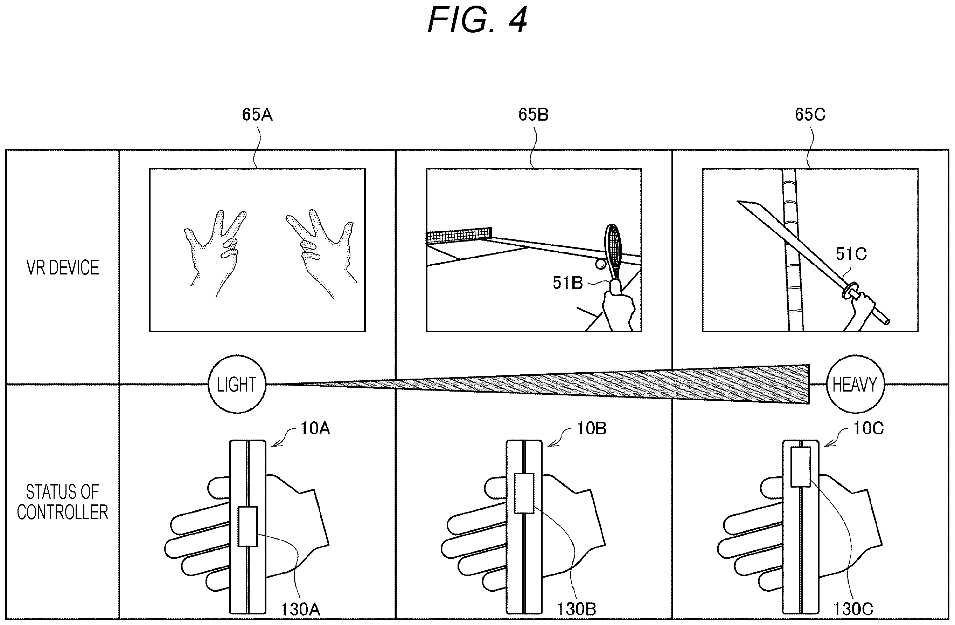

Fig. 4 is a diagram for explaining an example of controlling a position of the movable part 130 according to virtual objects corresponding to the controller 10. Referring to Fig. 4, an example in which an image 65A of the VR space is displayed by the VR device 83 is illustrated. In this example, the virtual object corresponding to the controller 10 does not exist in the VR space.

Furthermore, referring to Fig. 4, an example in which an image 65B of the VR space is displayed by the VR device 83 is illustrated. In this example, a virtual object 51B indicating a tennis racket as an example of the virtual object corresponding to the controller 10 exists in the VR space. In addition, an example in which an image 65C of the VR space is displayed by the VR device 83 is illustrated. In this example, a virtual object 51C indicating a sword as an example of the virtual object corresponding to the controller 10 exists in the VR space.

The App 812 may control the position of the movable part 130 on the basis of a predetermined parameter of the virtual object corresponding to the controller 10. Here, the predetermined parameter may include the weight of the virtual object corresponding to the controller 10. For example, the weight of the virtual object is preset in the App 812. Then, the App 812 may control the position of the movable part 130 on the basis of the weight of the virtual object corresponding to the controller 10.

For example, as the position of the movable part 130 is farther away from a grabbing position (for example, a center of the grabbing position) of the controller 10, the moment of the movable part 130 becomes larger, and accordingly, the user can easily feel a large weight of the controller 10. Thus, the App 812 may control the position of the movable part 130 such that the larger the weight of the virtual object corresponding to the controller 10 is, the farther the position of the movable part 130 is away from the grabbing position of the controller 10 by the user.

For example, the App 812 may control the position of the movable part 130 such that the larger the weight of the virtual object corresponding to the controller 10 is, the farther the position of the movable part 130 is away from the grabbing position of the controller 10 by the user in the upward direction of the controller 10.

In the example illustrated in Fig. 4, in a case where the image 65A of the VR space is displayed, the weight of the virtual object corresponding to a controller 10A is zero, and the weight is the smallest. In a case where the weight of the virtual object corresponding to the controller 10A is zero, the App 812 may control such that the position of a movable part 130A corresponding to the controller 10A remains still at the grabbing position of the controller 10A by the user.

In addition, in a case where the image 65B of the VR space is displayed, the weight of the virtual object 51B corresponding to a controller 10B is larger than zero. At this time, the App 812 may control such that the position of a movable part 130B corresponding to the controller 10B is away from the grabbing position of the controller 10B by the user in the upward direction of the controller 10B.

Furthermore, in a case where the image 65C of the VR space is displayed, the weight of the virtual object 51C corresponding to a controller 10C is supposed to be larger than the weight of the virtual object 51B. At this time, the App 812 may control such that the position of a movable part 130C corresponding to the controller 10C is away from the position of the movable part 130B in the upward direction of the controller 10C.

Note that a case where the size of the virtual object is preset in the App 812 is also assumed. Thus, the predetermined parameter of the virtual object corresponding to the controller 10 may include the size of the virtual object corresponding to the controller 10. Then, the App 812 may control the position of the movable part 130 on the basis of the size of the virtual object corresponding to the controller 10.

For example, the App 812 may control the position of the movable part 130 such that the larger the virtual object corresponding to the controller 10 is, the farther the position of the movable part 130 is away from the grabbing position of the controller 10 by the user. For example, the App 812 may control the position of the movable part 130 such that the larger the virtual object corresponding to the controller 10 is, the farther the position of the movable part 130 is away from the grabbing position of the controller 10 by the user in the upward direction of the controller 10.

Note that, here, an example in which the position of the movable part 130 is controlled on the basis of the weight or size of the virtual object corresponding to the controller 10 has been described. However, the control example of the position of the movable part 130 is not limited to such an example. For example, the control example of the position of the movable part 130 may be preset along the progress of the App 812. At this time, the App 812 may control the position of the movable part 130 on the basis of its own progress.

### (1.3. Contact between Virtual Objects)

The virtual object existing in the VR space is controlled according to the progress of the App 812. For example, there can be a case where another virtual object (second virtual object) different from the virtual object corresponding to the controller 10 exists in the VR space. At this time, in a case where the another virtual object comes in contact with the virtual object corresponding to the controller 10, it is desirable that this contact be fed back to the user.

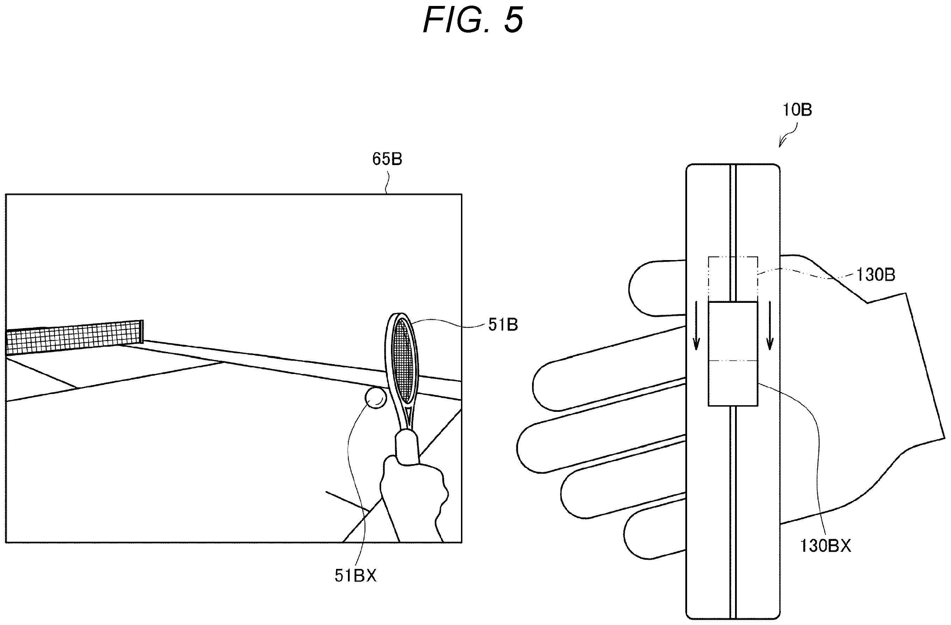

Fig. 5 is a diagram illustrating an example of presentation of a sense of force to a user based on contact of another virtual object with the virtual object corresponding to the controller 10. Referring to Fig. 5, an example in which an image 65B of the VR space is displayed by the VR device 83 is illustrated. In this example, a virtual object 51B indicating a tennis racket as an example of the virtual object corresponding to the controller 10B exists in the VR space. In addition, a virtual object 51BX indicating a ball as an example of another virtual object exists in the VR space.

At this time, the App 812 may change the position of the movable part 130 on the basis of the contact made between the virtual object 51B corresponding to the controller 10B and the virtual object 51BX. This can ensure that the contact of the virtual object 51BX with the virtual object 51B corresponding to the controller 10B is fed back to the user. As an example, as illustrated in Fig. 5, the position of the movable part 130B may be instantaneously moved in the downward direction of the controller 10B (for example, up to the position of a movable part 130BX).

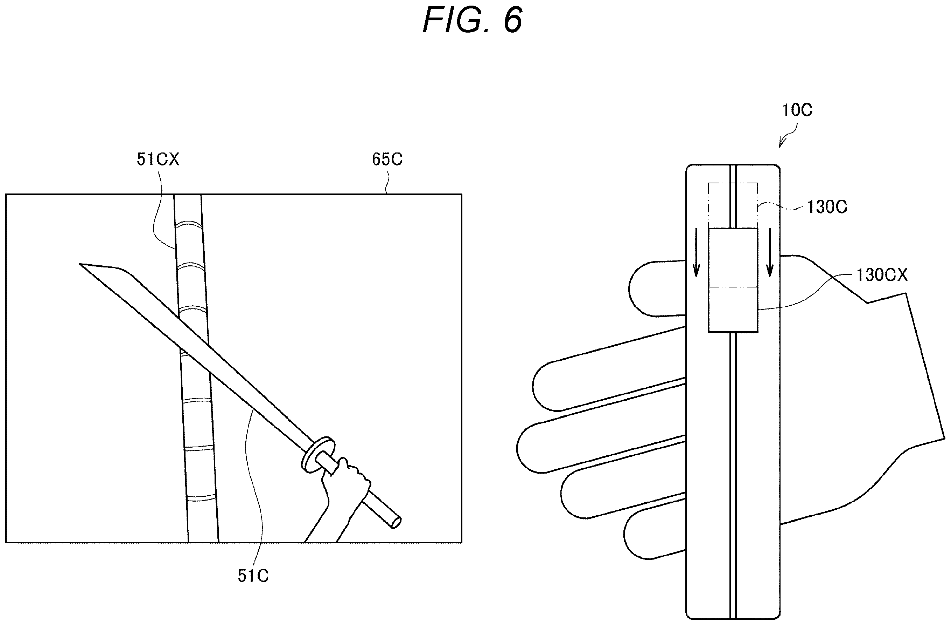

Fig. 6 is a diagram illustrating another example of presentation of a sense of force to a user based on contact of another virtual object with the virtual object corresponding to the controller 10. Referring to Fig. 6, an example in which an image 65C of the VR space is displayed by the VR device 83 is illustrated. In this example, a virtual object 51C indicating a sword as an example of the virtual object corresponding to the controller 10C exists in the VR space. In addition, a virtual object 51CX indicating bamboo as an example of another virtual object exists in the VR space.

At this time, the App 812 may change the position of the movable part 130 on the basis of the contact made between the virtual object 51C corresponding to the controller 10C and the virtual object 51CX. This can ensure that the contact of the virtual object 51CX with the virtual object 51C corresponding to the controller 10C is fed back to the user. As an example, as illustrated in Fig. 6, the position of the movable part 130C may be instantaneously moved in the downward direction of the controller 10C (for example, up to the position of a movable part 130CX).

### (1.4. Vibration of VCM 152)

In the above, an example in which the App 812 changes the position of the movable part 130 has been mainly described. However, in a case where the App 812 changes the position of the movable part 130, the App 812 may control the VCM 152 to vibrate while changing the position of the movable part 130. This can increase variations in senses of force to be presented to the user.

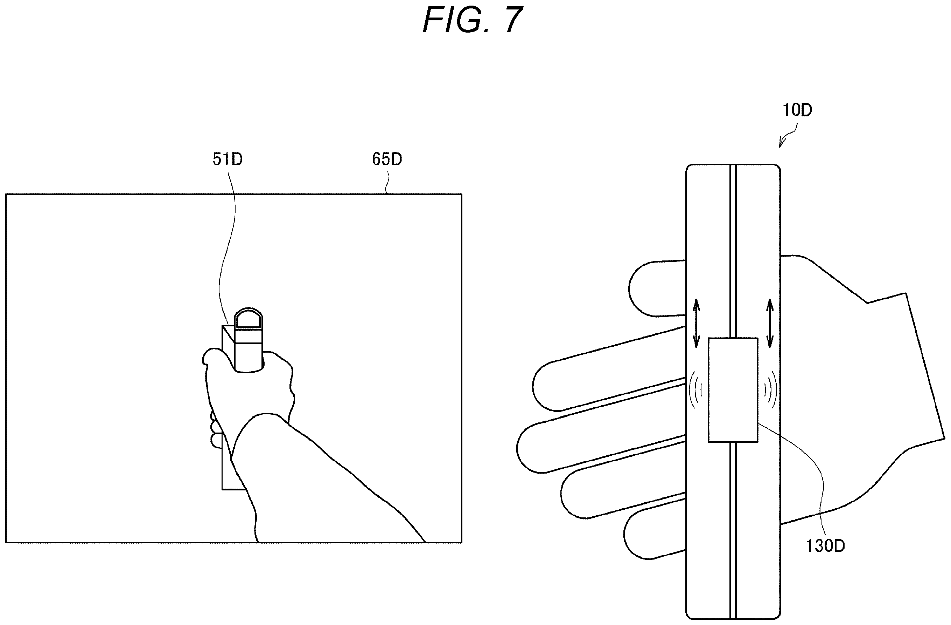

Fig. 7 is a diagram illustrating an example of presentation of a sense of force to a user. Referring to Fig. 7, an example in which an image 65D of the VR space is displayed by the VR device 83 is illustrated. In this example, a virtual object 51D indicating a gun as an example of the virtual object corresponding to a controller 10D exists in the VR space.

At this time, the App 812 may control the VCM 152 to vibrate while changing the position of a movable part 130D on the basis of detection of a predetermined operation of the user on the controller 10 (such as an operation of pressing the trigger button 162, as an example). This can ensure that a sense of force imitating the impact given to the hand of the user when squeezing the trigger of the gun is presented to the hand of the user.

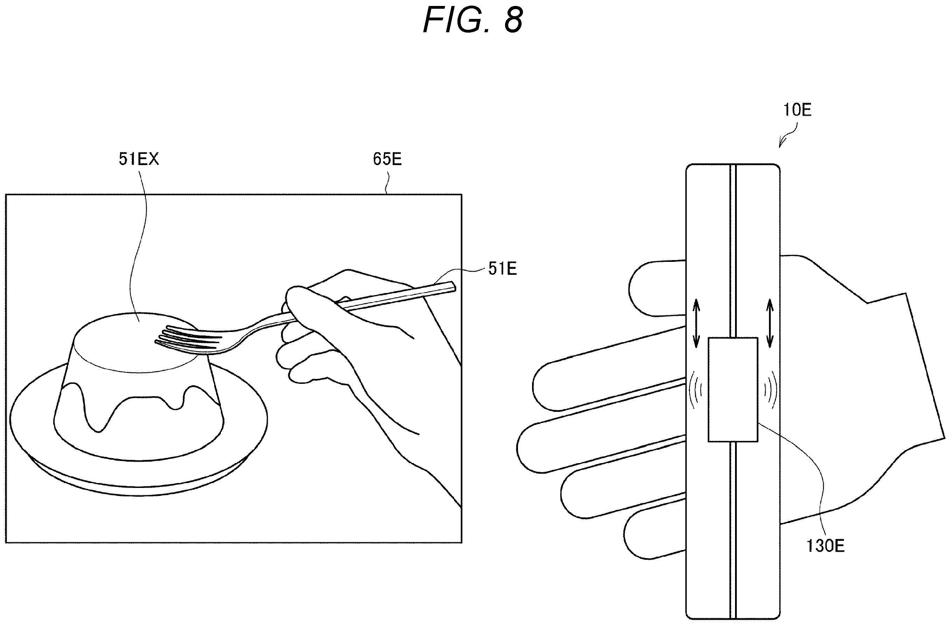

Fig. 8 is a diagram illustrating another example of presentation of a sense of force to a user. Referring to Fig. 8, an example in which an image 65E of the VR space is displayed by the VR device 83 is illustrated. In this example, a virtual object 51E indicating a fork as an example of the virtual object corresponding to a controller 10E exists in the VR space. In addition, a virtual object 51EX indicating a pudding as an example of another virtual object exists in the VR space.

At this time, the App 812 may control the VCM 152 to vibrate while changing the position of the movable part 130E on the basis of the contact made between the virtual object 51E corresponding to the controller 10E and the virtual object 51EX. This can ensure that a sense of force imitating the soft feel given to the hand of the user when the fork touches the pudding is presented to the hand of the user.

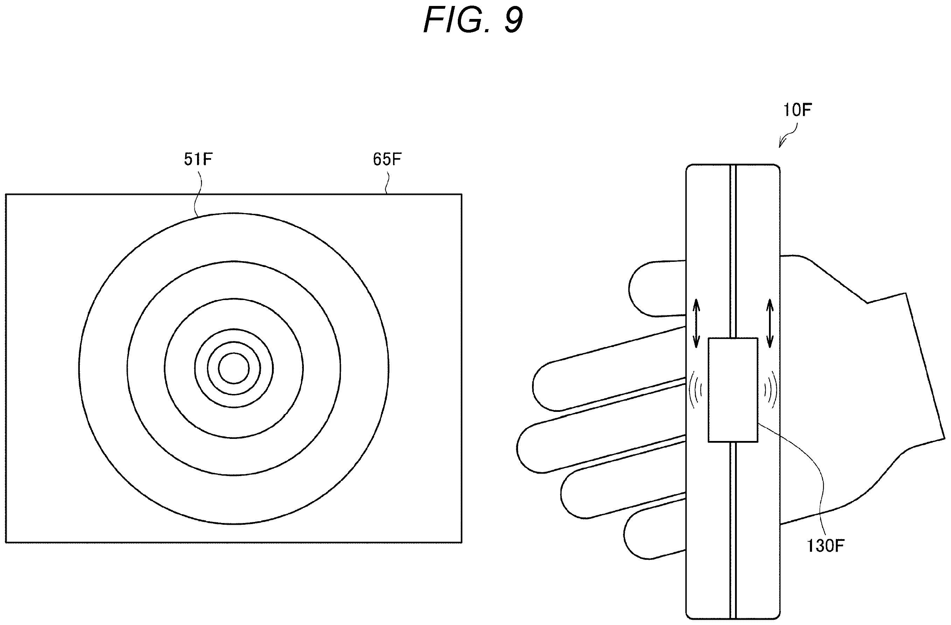

Fig. 9 is a diagram illustrating another example of presentation of a sense of force to a user. Referring to Fig. 9, an example in which an image 65F of the VR space is displayed by the VR device 83 is illustrated. In this example, a virtual object 51F indicating a wave exists in the VR space.

At this time, the App 812 may control the VCM 152 to vibrate while changing the position of a movable part 130F. This can ensure that a sense of force imitating the vibration that the wave gives to the hand of the user is presented to the hand of the user.

### (1.5. Weight Setting for Virtual Object)

In the above, an example has been described in which the position of the movable part 130 is controlled such that the larger the weight of the virtual object corresponding to the controller 10 is, the farther the position of the movable part 130 is away from the grabbing position of the controller 10 by the user. That is, supposing the grabbing position of the controller 10 by the user as a lowest level, the position of the movable part 130 can change to a highest level. The weight corresponding to the lowest level can be set as a lower limit value, and the weight corresponding to the highest level can be set as an upper limit value.

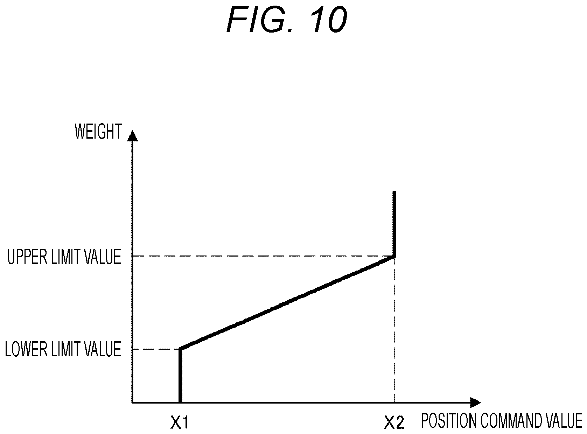

Fig. 10 is a diagram illustrating an example of a relationship between a position command value for the movable part 130 and a weight of the virtual object corresponding to the controller 10. Referring to Fig. 10, the position command value for the movable part 130 corresponding to the lowest level is indicated as X1, and the position command value for the movable part 130 corresponding to the highest level is indicated as X2. The lower limit value denotes the weight corresponding to the lowest level, and the upper limit value denotes the weight corresponding to the highest level. Such lower limit value and upper limit value can be optionally set by the user.

### (1.6. Approach of Position Control for Movable Part 130)

Next, a specific approach of position control for the movable part 130 will be described.

In the control apparatus 81, the App 812 controls such that a control signal (first control signal) for controlling the position of the movable part 130 is transmitted to the controller 10 at a timing of controlling the position of the movable part 130. The control signal includes a command value for the position of the movable part 130 (hereinafter, also referred to as a "position command value"). Note that the timing of controlling the position of the movable part 130 is as described above.

In the microcomputer 120 of the controller 10, the signal acquisition unit 121 acquires the control signal transmitted from the control apparatus 81, and the position control unit 122 controls the position of the movable part 130 in accordance with the control signal acquired by the signal acquisition unit 121. In more detail, the position control unit 122 controls the position of the movable part 130 on the basis of the position command value included in the control signal acquired by the signal acquisition unit 121.

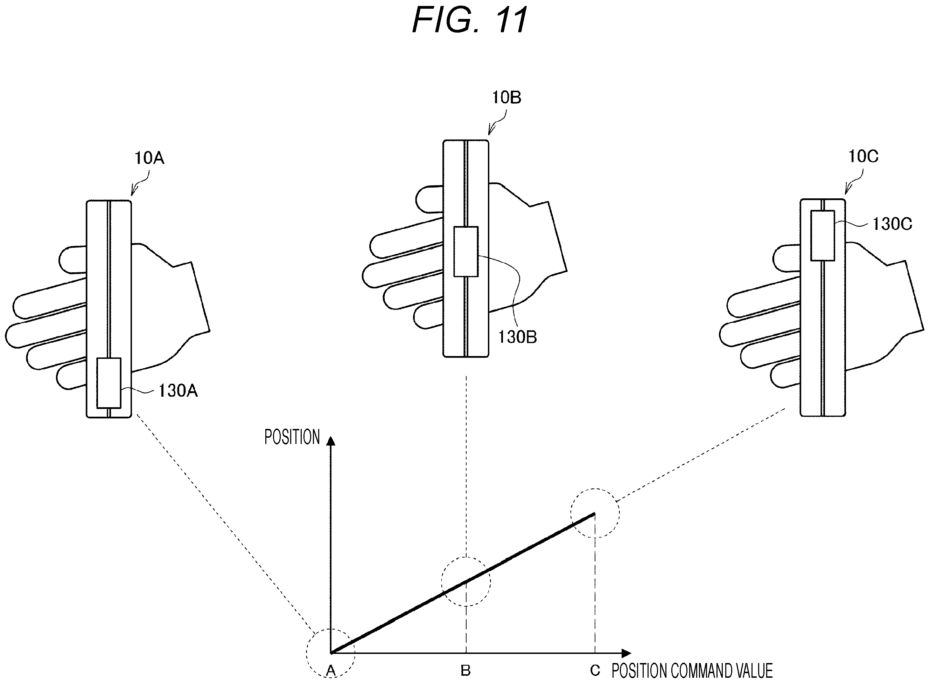

Fig. 11 is a diagram illustrating an example of a relationship between the position command value and the position of the movable part 130. Hereinafter, a case where the upward direction of the controller 10 is supposed as a positive direction of the position of the movable part 130 will be assumed. At this time, as illustrated in Fig. 11, as the position command value becomes larger (in the order of A, B, and C), the position of the movable part 130 may change in the upward direction of the controller 10 (in the order of the movable part 130A, the movable part 130B, and the movable part 130C) . For example, the position of the movable part 130 may linearly change with respect to the position command value.

Note that the position control unit 122 may control the position of the movable part 130 by notifying the motor driver 132 of a rotation instruction for the motor 133 according to the position command value. In more detail, the position control unit 122 may control the position of the movable part 130 by notifying the motor driver 132 of the rotation instruction for the motor 133 according to the position command value in consideration of the rotational speed, the position, and the like of the motor 133 output from the encoder 134.

### (1.7. Addition of Effect Signal)

In the above, an example in which the position of the movable part 130 linearly changes with respect to the position command value has been mainly described. However, the position of the movable part 130 does not have to change linearly with respect to the position command value. For example, an effect signal may be added to the position command value. At this time, the position of the movable part 130 may be controlled on the basis of an added signal of the position command value and the effect signal. This allows the user to clearly grasp the change in position of the movable part 130.

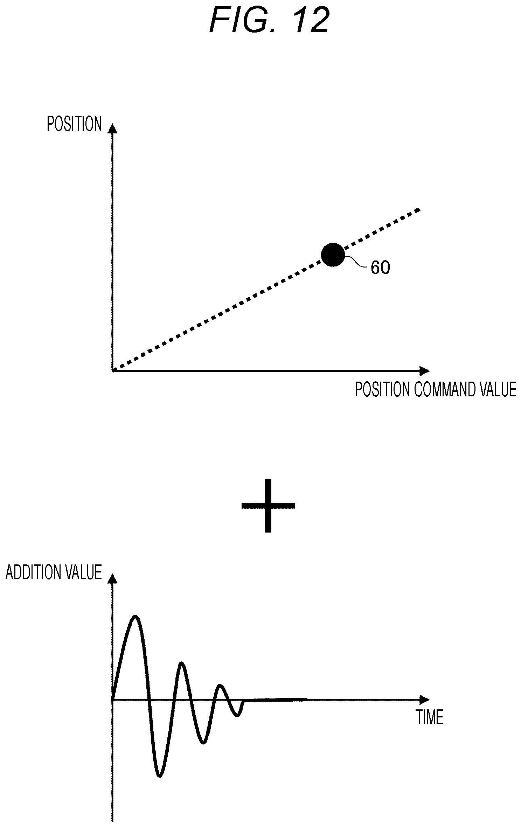

Fig. 12 is a diagram illustrating an example of addition of an effect signal. Referring to Fig. 12, similarly to Fig. 11, an example of a relationship between the position command value and the position of the movable part 130 is illustrated. A position 60 corresponds to a target position of the movable part 130. In addition, an effect signal in which an addition value changes with lapse of time is illustrated. The position control unit 122 may obtain the added signal by adding the position command value and the effect signal. Then, the position control unit 122 may control the position of the movable part 130 on the basis of the added signal.

### (1.8. Presentation of Pseudo Sense of Force with Nonlinear Waveform)

In the above, a case where the movable part 130 remains still without moving or a case where the movable part 130 remains still after moving has been mainly assumed. However, the position of the movable part 130 may change asymmetrically. With an asymmetric change in the position of the movable part 130, a pseudo sense of force can be presented to the user.

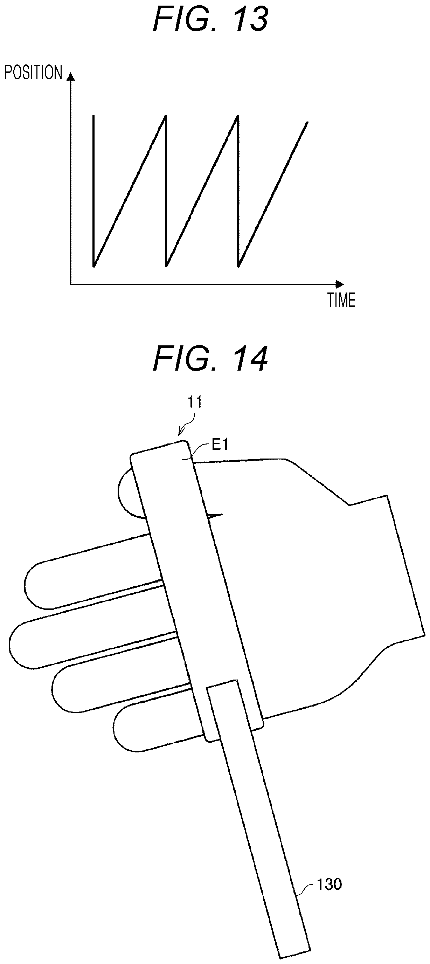

Fig. 13 is a diagram for explaining an example of presentation of a pseudo sense of force with a nonlinear waveform. Referring to Fig. 13, after moving the movable part 130 in one direction of the vertical direction of the controller 10, the position control unit 122 repeatedly moves the movable part 130 in a reverse direction to the one direction of the controller 10 at a speed slower than a moving speed in the one direction. In this manner, by generating a difference in acceleration arising in the vertical direction, a pseudo sense of force as if pulled in the one direction can be presented to the user.

### (1.9. Movable Range of Movable Part 130)

In the above, a case where the movable part 130 is always accommodated in the housing E1 of the controller 10 has been mainly assumed. However, there may be a case where the movable part 130 is not accommodated in the housing E1 of the controller 10. That is, the movable part 130 may be configured such that the movable part 130 is allowed to move to the outside of the housing E1 of the controller 10.

Fig. 14 is a diagram for explaining a modification of a movable range of the movable part 130. Referring to Fig. 14, a controller 11 as a modification of the controller 10 is illustrated. The controller 11 includes the movable part 130. At this time, the movable part 130 may be configured such that the movable part 130 is allowed to move to the outside of the housing E1 of the controller 11 (here, the outside of the controller 11 in the downward direction).

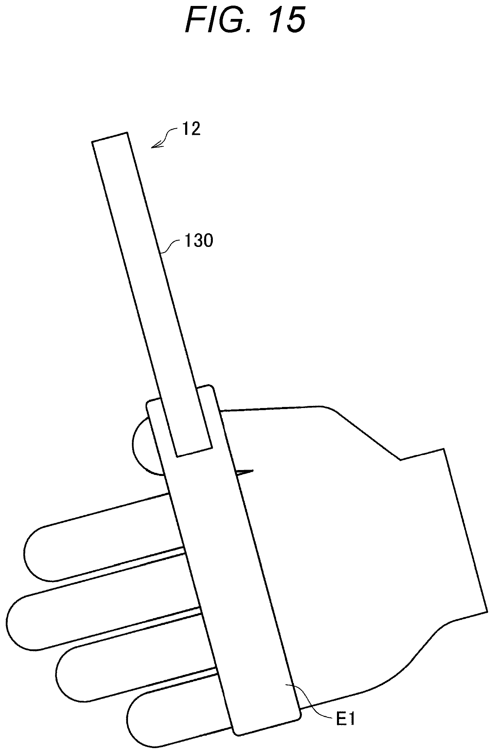

Fig. 15 is a diagram for explaining another modification of the movable range of the movable part 130. Referring to Fig. 15, a controller 12 as a modification of the controller 10 is illustrated. The controller 12 includes the movable part 130. At this time, the movable part 130 may be configured such that the movable part 130 is allowed to move to the outside of the housing E1 of the controller 12 (here, the outside of the controller 12 in the upward direction).

The first embodiment of the present disclosure has been described above.

### <2. Second Embodiment>

Next, a second embodiment of the present disclosure will be described in detail.

### (2.1. System Configuration Example)

First, a configuration example of an information processing system according to the second embodiment of the present disclosure will be described.

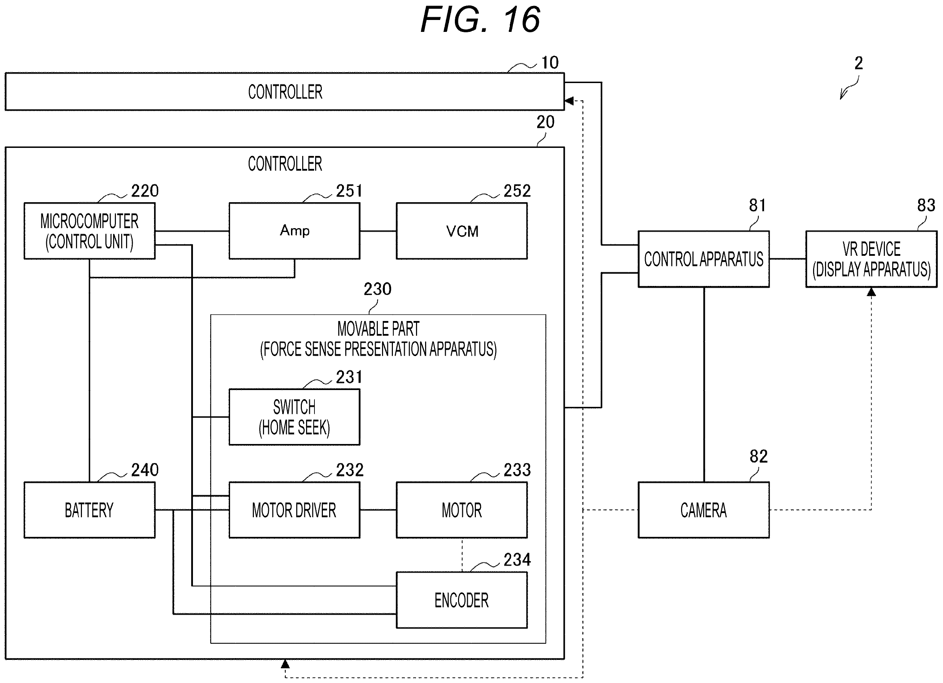

In the first embodiment of the present invention, a case where the controller 10 alone is grabbed by the hand of the user has been mainly assumed. However, a member (second member) other than the controller 10 may be connected to the controller 10. Here, the type of the member connected to the controller 10 is not limited. In the second embodiment of the present disclosure, a case where the member connected to the controller 10 is a controller 20 (Fig. 16) will be mainly assumed.

Fig. 16 is a diagram illustrating a configuration example of an information processing system according to the second embodiment of the present disclosure. As illustrated in Fig. 16, an information processing system 2 according to the second embodiment of the present disclosure includes a controller 10, a control apparatus 81, a camera 82, and a VR device 83, similarly to the information processing system 1 according to the first embodiment of the present disclosure. Furthermore, unlike the information processing system 1 according to the first embodiment of the present disclosure, the information processing system 2 according to the second embodiment of the present disclosure includes the controller 20 connected to the controller 10.

Note that the functions that the controller 10, the control apparatus 81, the camera 82, and the VR device 83 have are similar between the second embodiment of the present disclosure and the first embodiment of the present disclosure. Therefore, in the second embodiment of the present disclosure, detailed description of the functions that the controller 10, the control apparatus 81, the camera 82, and the VR device 83 have will be omitted.

### (Controller 20)

The controller 20 includes a microcomputer 220 (control unit), a movable part 230 (second movable part) as an example of the force sense presentation apparatus, a battery 240, an Amp 251, and a VCM 252 as another example of the force sense presentation apparatus. The movable part 230 includes a home seek switch 231, a motor driver 232, a motor 233, and an encoder 234. Besides, the movable part 230 includes a substrate (not illustrated) on which these components are disposed.

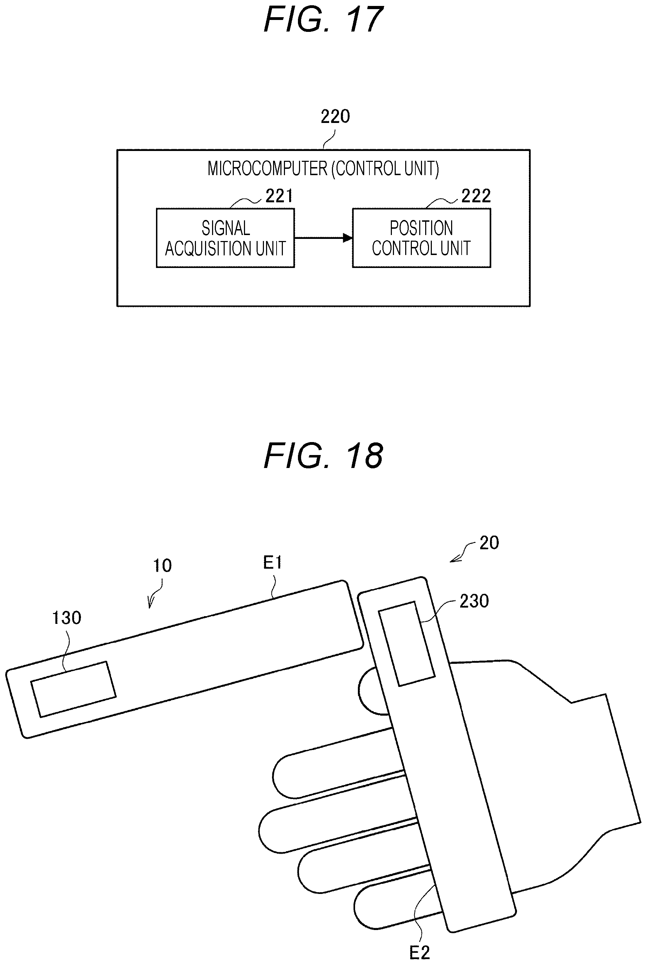

Note that the functions that the movable part 230, the battery 240, the Amp 251, and the VCM 252 have are similar to the functions that the movable part 130, the battery 140, the Amp 151, and the VCM 152 according to the first embodiment of the present disclosure have. Therefore, a detailed description of the functions that the battery 240, the Amp 251, and the VCM 252 have will be omitted. A functional configuration example of the microcomputer 220 will be described with reference to Fig. 17.

Fig. 17 is a diagram illustrating a functional configuration example of the microcomputer 220. As illustrated in Fig. 17, the microcomputer 220 includes a signal acquisition unit 221 and a position control unit 222. The functions that each of the signal acquisition unit 221 and the position control unit 222 has will be described in detail later. Returning to Fig. 16, the description will be continued.

Note that the functions that the microcomputer 220 has may be incorporated in a microcomputer 120 included in the controller 10. At this time, the controller 20 is also electrically connected to the controller 10. Alternatively, in a case where a microcomputer exists outside the controller 10 and the controller 20, the functions that the microcomputer 220 has may be incorporated in the microcomputer existing outside the controller 10 and the controller 20.

The control apparatus 81 is connected to each of the controller 10, the camera 82, and the VR device 83 in a wired or wireless manner. Besides, the control apparatus 81 is connected to the controller 20 in a wired or wireless manner.

The connection relationship between the controller 10 and the controller 20 may have one pattern. However, in the embodiment of the present disclosure, a case where the connection relationship between the controller 10 and the controller 20 has a plurality of patterns will be mainly assumed. The connection relationship between the controller 10 and the controller 20 can be represented by an angle between the controller 10 and the controller 20. In more detail, a case where the angle between the controller 10 and the controller 20 is 90 degrees and a case where the angle between the controller 10 and the controller 20 is zero degrees will be mainly assumed.

### (2.2. Case Where Angle between Controllers is 90 Degrees)

A case where the angle between the controller 10 and the controller 20 is 90 degrees will be described with reference to Figs. 18 to 20. Note that the following description of a case where the angle between the controller 10 and the controller 20 is 90 degrees is not applied only to a case where the angle between the controller 10 and the controller 20 is strictly 90 degrees.

Fig. 18 is a diagram illustrating a usage example of controllers in a case where an angle between the controllers is 90 degrees. Referring to Fig. 18, the controller 10 and the controller 20 are connected such that the angle between the controller 10 and the controller 20 is 90 degrees. A movable part 130 exists inside a housing E1 of the controller 10. Meanwhile, the movable part 230 exists inside a housing E2 of the controller 20.

In the example illustrated in Fig. 18, the controller 20 is grabbed by the hand of the user. At this time, in the controller 10 not grabbed by the hand of the user, a direction distant from the hand of the user is also referred to as the "upward direction of the controller" for convenience. In addition, in the controller 10, a direction near the hand of the user is also referred to as the "downward direction of the controller" for convenience. Note that the user is also allowed to grab the controller 10 by hand.

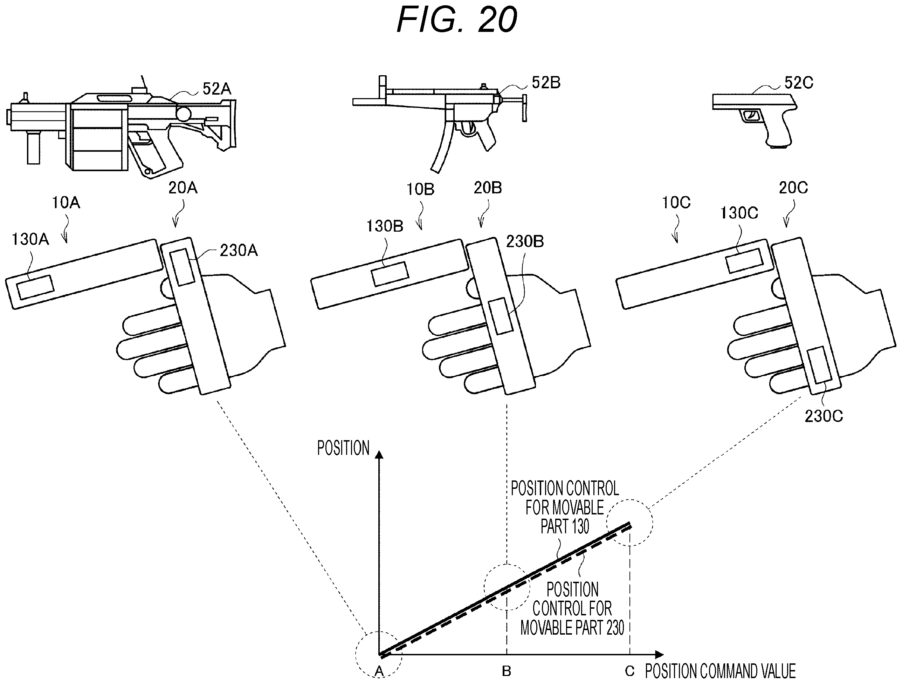

In the control apparatus 81, the App 812 controls such that a control signal (first control signal) for controlling the position of the movable part 130 is transmitted to the controller 10 while controlling such that the control signal (first control signal) is transmitted to the controller 20 at a timing of controlling the position of the movable part 130 and the position of the movable part 230. The control signal includes the position command value. Note that an example of the timing of controlling the position of the movable part 130 and the position of the movable part 230 will be described later with reference to Fig. 20.

In the microcomputer 120 of the controller 10, a signal acquisition unit 121 acquires the control signal transmitted from the control apparatus 81, and a position control unit 122 controls the position of the movable part 130 in accordance with the control signal acquired by the signal acquisition unit 121. In more detail, the position control unit 122 controls the position of the movable part 130 on the basis of the position command value included in the control signal acquired by the signal acquisition unit 121.

In the microcomputer 220 of the controller 20, the signal acquisition unit 221 acquires the control signal transmitted from the control apparatus 81, and the position control unit 222 controls the position of the movable part 230 in accordance with the control signal acquired by the signal acquisition unit 221. In more detail, the position control unit 222 controls the position of the movable part 230 on the basis of the position command value included in the control signal acquired by the signal acquisition unit 221.

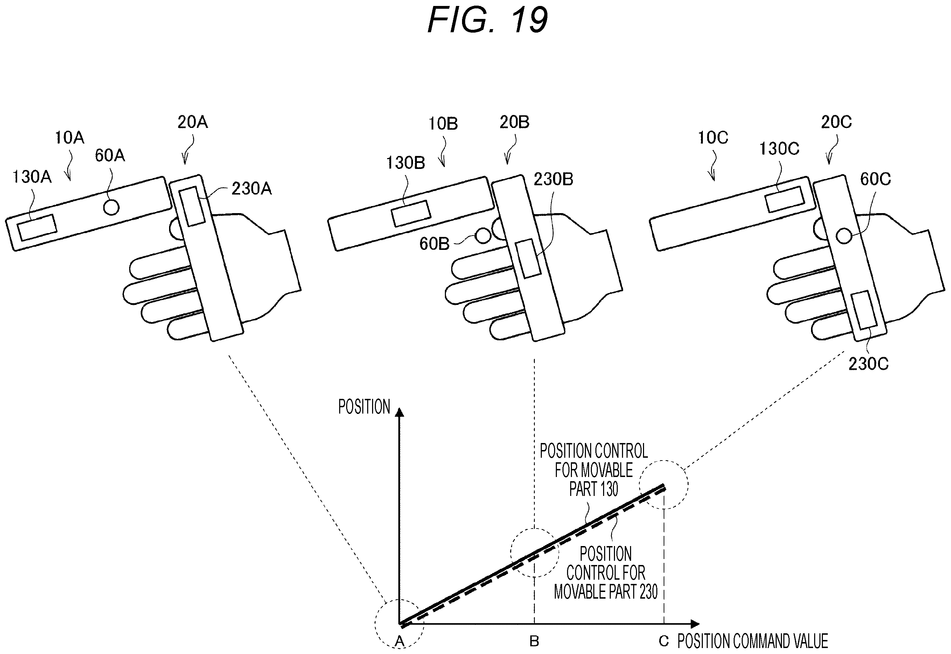

Fig. 19 is a diagram illustrating an example of a relationship between the position command value, and the position of the movable part 130 and the position of the movable part 230. Here, a case where the downward direction of the controller 10 is supposed as a positive direction of the position of the movable part 130 and the downward direction of the controller 20 is supposed as a positive direction of the movable part 230 is assumed.

At this time, as illustrated in Fig. 19, as the position command value becomes larger (in the order of A, B, and C), the position of the movable part 130 may change in the downward direction of controllers 10A to 10C (in the order of a movable part 130A, a movable part 130B, and a movable part 130C). For example, the position of the movable part 130 may linearly change with respect to the position command value.

Furthermore, as illustrated in Fig. 19, as the position command value becomes larger (in the order of A, B, and C), the position of the movable part 230 may change in the downward direction of controllers 20A to 20C (in the order of a movable part 230A, a movable part 230B, and a movable part 230C). For example, the position of the movable part 230 may linearly change with respect to the position command value.

In this manner, in a case where the angle between the controller 10 and the controller 20 is 90 degrees, it is desirable that the movable part 130 and the movable part 230 move simultaneously with respect to one position command value. This changes the position of the center of gravity (60A, 60B, and 60C) of the movable part 130 and the movable part 230 so as to draw a trajectory close to a straight line, and accordingly, the possibility of making the user feel an unnatural change in the position of the center of gravity can be reduced.

Note that the position control unit 122 may control the position of the movable part 130 by notifying a motor driver 132 of a rotation instruction for a motor 133 according to the position command value. Similarly, the position control unit 222 may control the position of the movable part 230 by notifying the motor driver 232 of a rotation instruction for the motor 233 according to the position command value.

Fig. 20 is a diagram for explaining an example of controlling the position of the movable part 130 and the position of the movable part 230 according to a virtual object corresponding to a combination of the controller 10 and the controller 20. Referring to Fig. 20, a virtual object 52A indicating a gun as an example of the virtual object corresponding to a combination of the controller 10 and the controller 20 exists in the VR space.

Furthermore, referring to Fig. 20, a virtual object 52B indicating a gun as an example of the virtual object corresponding to a combination of the controller 10 and the controller 20 exists in the VR space. In addition, referring to Fig. 20, a virtual object 52C indicating a gun as an example of the virtual object corresponding to a combination of the controller 10 and the controller 20 exists in the VR space.

The App 812 may control the position of the movable part 130 and the position of the movable part 230 on the basis of a predetermined parameter of the virtual object corresponding to a combination of the controller 10 and the controller 20. Here, the predetermined parameter may include the weight of the virtual object. For example, the weight of the virtual object is preset in the App 812. Then, the App 812 may control the position of the movable part 130 and the position of the movable part 230 on the basis of the weight of the virtual object.

For example, as the position of the movable part 130 and the position of the movable part 230 are farther away from the grabbing position (for example, a center of the grabbing position) of the controller 20, the moments of the movable part 130 and the movable part 230 become larger, and accordingly, the user can easily feel a large weight of the controller 10 and the controller 20. Thus, the App 812 may control the position of the movable part 130 and the position of the movable part 230 such that the larger the weight of the virtual object is, the farther the position of the movable part 130 and the position of the movable part 230 are away from the grabbing position of the controller 20 by the user.

For example, the App 812 may move the movable part 130 more in the upward direction of the controller 10 while moving the movable part 230 more in the upward direction of the controller 20 as the weight of the virtual object is larger.

In the example illustrated in Fig. 20, the weight of the virtual object 52A is the largest, the weight of the virtual object 52B is the second largest, and the weight of the virtual object 52C is the smallest.

Therefore, the App 812 may move the movable part 130B and the movable part 230B corresponding to the virtual object 52B in the downward direction more than the movable part 130A and the movable part 230A corresponding to the virtual object 52A and may move the movable part 130C and the movable part 230C corresponding to the virtual object 52C in the downward direction more than the movable part 130B and the movable part 230B corresponding to the virtual object 52B.

### (2.3. Case Where Angle between Controllers is Zero Degrees)

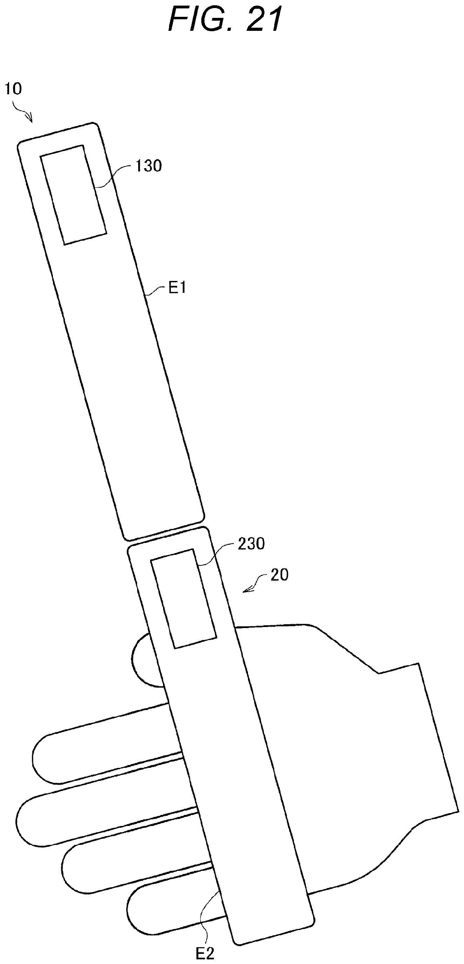

A case where the angle between the controller 10 and the controller 20 is zero degrees will be described with reference to Figs. 21 to 23. Note that the following description of a case where the angle between the controller 10 and the controller 20 is zero degrees is not applied only to a case where the angle between the controller 10 and the controller 20 is strictly zero degrees.

Fig. 21 is a diagram illustrating a usage example of controllers in a case where an angle between the controllers is zero degrees. Referring to Fig. 21, the controller 10 and the controller 20 are connected such that the angle between the controller 10 and the controller 20 is zero degrees. The movable part 130 exists inside the housing E1 of the controller 10. Meanwhile, the movable part 230 exists inside the housing E2 of the controller 20.

In the example illustrated in Fig. 21, the controller 20 is grabbed by the hand of the user. However, the user is also allowed to grab the controller 10 by hand.

In the control apparatus 81, the App 812 controls such that a control signal (first control signal) for controlling the position of the movable part 130 is transmitted to the controller 10 at a timing of controlling the position of the movable part 130. The control signal includes the position command value. Furthermore, the App 812 controls such that a control signal (second control signal) for controlling the position of the movable part 230 is transmitted to the controller 20 at a timing of controlling the position of the movable part 230. The control signal includes the position command value.

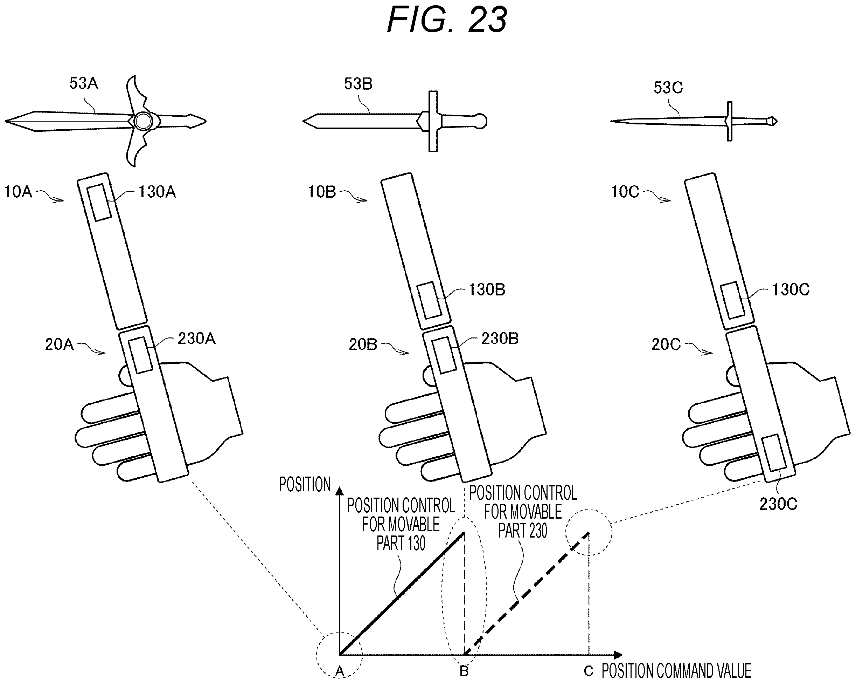

In a case where the angle between the controller 10 and the controller 20 is zero degrees, the control signal for controlling the position of the movable part 130 and the control signal for controlling the position of the movable part 230 are different control signals. Note that an example of the timing of controlling the position of the movable part 130 and the position of the movable part 230 will be described later with reference to Fig. 23.

In the microcomputer 120 of the controller 10, the signal acquisition unit 121 acquires the control signal (first control signal) transmitted from the control apparatus 81, and the position control unit 122 controls the position of the movable part 130 in accordance with the control signal acquired by the signal acquisition unit 121. In more detail, the position control unit 122 controls the position of the movable part 130 on the basis of the position command value included in the control signal acquired by the signal acquisition unit 121.

In the microcomputer 220 of the controller 20, the signal acquisition unit 221 acquires the control signal (second control signal) transmitted from the control apparatus 81, and the position control unit 222 controls the position of the movable part 230 in accordance with the control signal acquired by the signal acquisition unit 221. In more detail, the position control unit 222 controls the position of the movable part 230 on the basis of the position command value included in the control signal acquired by the signal acquisition unit 221.

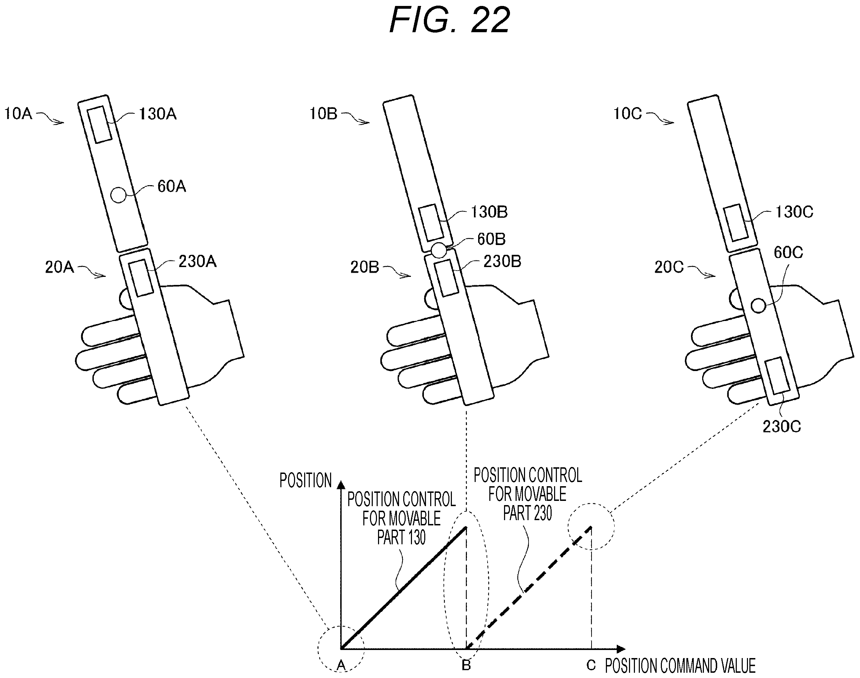

Fig. 22 is a diagram illustrating an example of a relationship between the position command value, and the position of the movable part 130 and the position of the movable part 230. Here, a case where the downward direction of the controller 10 is supposed as a positive direction of the position of the movable part 130 and the downward direction of the controller 20 is supposed as a positive direction of the movable part 230 is assumed.

At this time, as illustrated in Fig. 22, as the position command value becomes larger (in the order of A and B), the position of the movable part 130 may change in the downward direction of the controllers 10A and 10B (in the order of the movable part 130A and the movable part 130B). For example, the position of the movable part 130 may linearly change with respect to the position command value.

Furthermore, as illustrated in Fig. 22, as the position command value becomes larger (in the order of B and C), the position of the movable part 230 may change in the downward direction of controllers 20B and 20C (in the order of the movable part 230B and the movable part 230C). For example, the position of the movable part 230 may linearly change with respect to the position command value.

In this manner, in a case where the angle between the controller 10 and the controller 20 is zero degrees, it is desirable that the movable part 130 and the movable part 230 move continuously with respect to separate position command values. This gradually changes the position of the center of gravity (60A, 60B, and 60C) of the movable part 130 and the movable part 230 so as to draw a trajectory close to a straight line, and accordingly, the range of changes in the position of the center of gravity that the user is caused to feel can be enlarged.

Fig. 23 is a diagram for explaining an example of controlling the position of the movable part 130 and the position of the movable part 230 according to a virtual object corresponding to a combination of the controller 10 and the controller 20. Referring to Fig. 23, a virtual object 53A indicating a sword as an example of the virtual object corresponding to a combination of the controller 10 and the controller 20 exists in the VR space.

Furthermore, referring to Fig. 23, a virtual object 53B indicating a sword as an example of the virtual object corresponding to a combination of the controller 10 and the controller 20 exists in the VR space. In addition, referring to Fig. 23, a virtual object 53C indicating a sword as an example of the virtual object corresponding to a combination of the controller 10 and the controller 20 exists in the VR space.

The App 812 may move the movable part 130 more in the upward direction of the controller 10 as the weight of the virtual object is larger. In addition, the App 812 may move the movable part 230 more in the upward direction of the controller 20 as the weight of the virtual object is larger.

In the example illustrated in Fig. 23, the weight of the virtual object 53A is the largest, the weight of the virtual object 53B is the second largest, and the weight of the virtual object 53C is the smallest.

Therefore, the App 812 may move the movable part 130B corresponding to the virtual object 53B in the downward direction more than the movable part 130A corresponding to the virtual object 53A. In addition, the App 812 may move the movable part 230C corresponding to the virtual object 53C in the downward direction more than the movable part 230B corresponding to the virtual object 53B.

### (2.4. Supplemental Items)

Note that a case where the size of the virtual object is preset in the App 812 is also assumed. Thus, the predetermined parameter of the virtual object corresponding to the combination of the controller 10 and the controller 20 may include the size of the virtual object corresponding to the combination of the controller 10 and the controller 20. Then, the App 812 may control the position of the movable part 130 and the position of the movable part 230 on the basis of the size of the virtual object.

For example, the App 812 may move the position of the movable part 130 and the position of the movable part 230 in the upward direction as the virtual object is larger. For example, the App 812 may move the position of the movable part 130 and the position of the movable part 230 in the upward direction as the virtual object is larger.

Note that, here, an example in which the position of the movable part 130 and the position of the movable part 230 are controlled on the basis of the weight or size of the virtual object has been described. However, the control example of the position of the movable part 130 and the position of the movable part 230 is not limited to such an example. For example, the control example of the position of the movable part 130 and the position of the movable part 230 may be preset along the progress of the App 812. At this time, the App 812 may control the position of the movable part 130 and the position of the movable part 230 on the basis of its own progress.

### (2.5. Position Control according to Connection Relationship)

Two control examples of the position of the movable part 130 and the position of the movable part 230 have been described above with reference to Figs. 18 to 23.

In this manner, the App 812 may vary the combination in control of the position of the movable part 130 and the position of the movable part 230 according to the connection relationship between the controller 10 and the controller 20. For example, the App 812 may determine a combination in control of the position of the movable part 130 and the position of the movable part 230 according to the angle between the controller 10 and the controller 20.

Note that, in the above, an example has been described in which, in a case where the angle between the controller 10 and the controller 20 is zero degrees, the position of the movable part 130 and the position of the movable part 230 are controlled on the basis of separate control signals, and in a case where the angle between the controller 10 and the controller 20 is 90 degrees, the position of the movable part 130 and the position of the movable part 230 are controlled on the basis of the same control signal. However, there can be a case where the angle between the controller 10 and the controller 20 is other than zero degrees and 90 degrees.

In a case where the angle between the controller 10 and the controller 20 is a predetermined angle (such as zero degrees) or smaller, the App 812 may control the position of the movable part 130 and the position of the movable part 230 on the basis of separate control signals. On the other hand, in a case where the angle between the controller 10 and the controller 20 is larger than a predetermined angle (such as zero degrees), the App 812 may control the position of the movable part 130 and the position of the movable part 230 on the basis of the same control signal.

### (2.6. Indirect Connection between Controllers)

The connection relationship between the controller 10 and the controller 20 may be selectable by the user. For example, in a case where the controller 10 and the controller 20 are indirectly connected via a joint (another member), the connection relationship between the controller 10 and the controller 20 can be altered according to the shape of the joint selected by the user. For example, when each of the controller 10 and the controller 20 exists alone, a detachable cap may be put on each of the controller 10 and the controller 20.

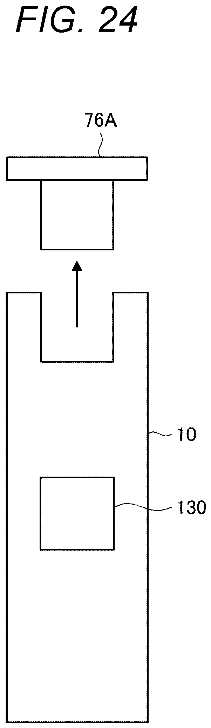

Fig. 24 is a diagram illustrating a state in which a cap is removed from the controller 10. As illustrated in Fig. 24, a cap 76A is put on the controller 10, and the cap 76A may be detachable from the controller 10 manually by the user. In addition, as illustrated in Fig. 24, after the cap 76A is detached, a recess of the controller 10 may be exposed.

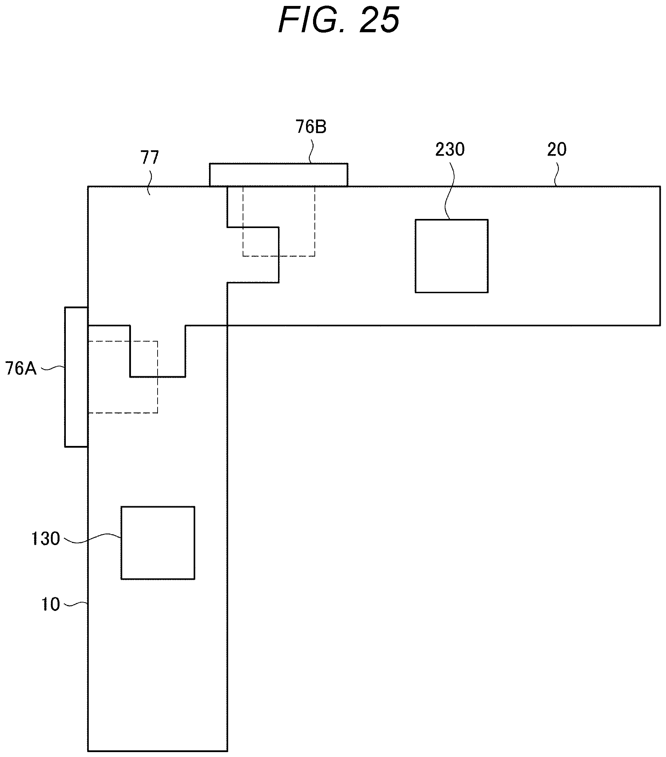

Fig. 25 is a diagram illustrating a connection example of the controller 10 and the controller 20 via a joint. Similarly to the controller 10, when the controller 20 exists alone, a cap 76B is also put on the controller 20, and the cap 76B may be detachable from the controller 20 manually by the user. In addition, after the cap 76B is detached, a recess of the controller 20 may be exposed.

As illustrated in Fig. 25, the user may be allowed to fit a joint 77 into the recess of the controller 10 and the recess of the controller 20. This connects the controller 10 and the controller 20 at a predetermined angle (here, 90 degrees). Furthermore, as illustrated in Fig. 25, it may be possible to fix the joint 77 and the controller 10 with the cap 76A and fix the joint 77 and the controller 20 with the cap 76B.

### (2.7. Recognition of Connection Relationship)

Note that the connection relationship between the controller 10 and the controller 20 may be recognized in any way. For example, the App 812 may recognize the connection relationship between the controller 10 and the controller 20 on the basis of sensor data obtained from a predetermined sensor. Here, the type of the sensor is not limited.

For example, a case where an acceleration sensor is provided in each of the controller 10 and the controller 20 is assumed. In such a case, the sensor data may include the acceleration measured by the acceleration sensor. That is, the App 812 may recognize a gravity direction with the orientation of each of the controller 10 and the controller 20 as a reference on the basis of the acceleration measured by these acceleration sensors and recognize the connection relationship between the controller 10 and the controller 20 on the basis of the recognized gravity direction.

Alternatively, in a case where the sensor is the camera 82, the sensor data may include an image captured by the camera 82. That is, the App 812 may recognize the shape of the joint 77 on the basis of the image captured by the camera 82 and recognize the connection relationship between the controller 10 and the controller 20 on the basis of the recognized shape of the joint 77.

Alternatively, a case where the color of the joint 77 is different for each shape of the joint 77 is assumed. In such a case, the App 812 may recognize the color of the joint 77 on the basis of the image captured by the camera 82 and recognize the connection relationship between the controller 10 and the controller 20 on the basis of the shape corresponding to the recognized color of the joint 77.

Alternatively, the App 812 may attempt to recognize the joint 77 on the basis of the image captured by the camera 82. Then, with the recognition of the joint 77 as a trigger, the App 812 may recognize the connection relationship between the controller 10 and the controller 20 appearing in the image captured by the camera 82.

### (2.8. Direct Connection between Controllers)

The controller 10 and the controller 20 may be directly connected not via another member. In such a case, connecting parts are provided at a plurality of different portions of the controller 20, and the connection relationship between the controller 10 and the controller 20 can be altered by altering between the connecting parts of the controller 20 with which a connecting part of the controller 10 is brought into contact.

For example, the microcomputer 120 and the microcomputer 220 may recognize which connecting parts are in contact with each other by receiving, from the contact portion, an electrical signal generated by the contact between the connecting parts. For example, the combination of the connecting part of the controller 10 and the connecting part of the controller 20 may be constituted by a combination of a magnet and a terminal.

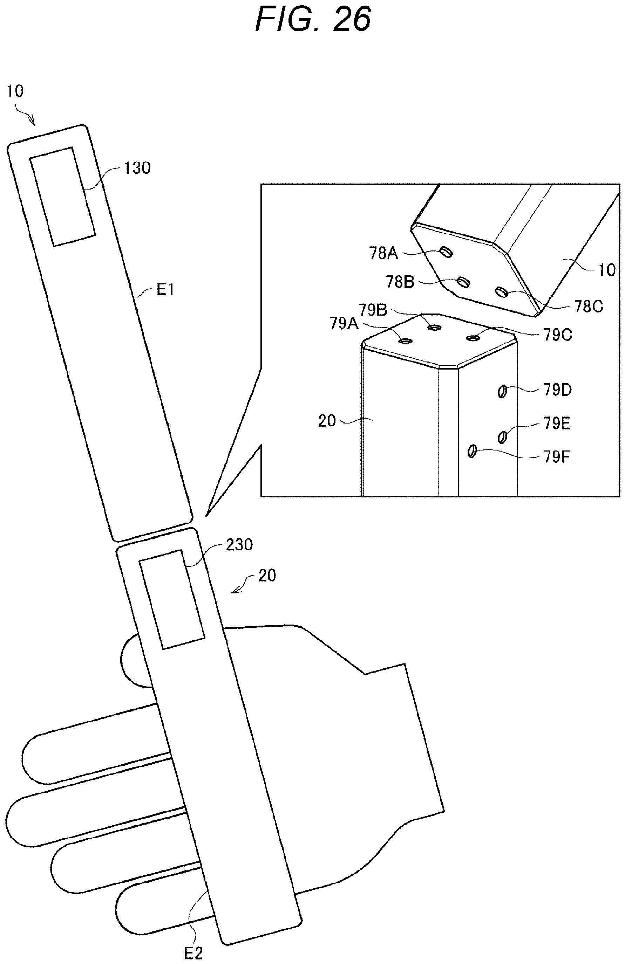

Fig. 26 is a diagram illustrating an example of direct connection between controllers forming an angle of zero degrees. Referring to Fig. 26, connecting parts 78A to 78C are provided on a lower surface of the controller 10. In addition, connecting parts 79A to 79C are provided on an upper surface of the controller 20.

In this example, the connecting parts 78A to 78C are constituted by protrusions, the connecting parts 79A to 79C are constituted by recesses, and the connecting parts 78A to 78C are fitted into the connecting parts 79A to 79C, whereby the controller 10 and the controller 20 are connected by forming an angle of zero degrees. However, the connecting parts 78A to 78C may be constituted by recesses, and the connecting parts 79A to 79C may be constituted by protrusions.

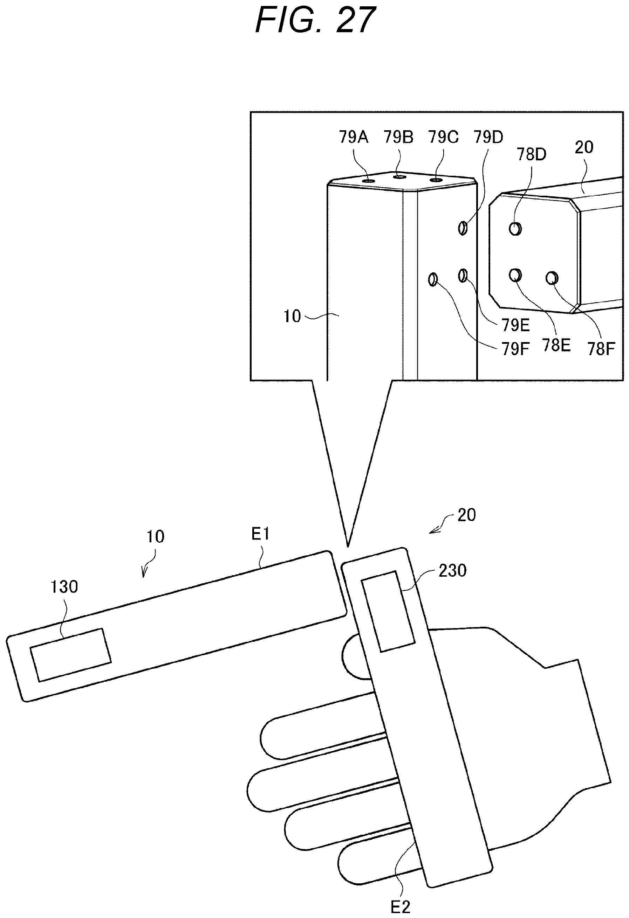

In addition, in order to facilitate connection between the controllers, the connecting parts 78A to 78C and the connecting parts 79A to 79C may be attracted to each other by a magnetic force. Furthermore, connecting parts 79D to 79F are provided on a side surface of the controller 20. The connecting parts 79D to 79F are used for direct connection between controllers forming an angle of 90 degrees. This example will be described below with reference to Fig. 27.

Fig. 27 is a diagram illustrating an example of direct connection between controllers forming an angle of 90 degrees. In the example illustrated in Fig. 27, the connecting parts 78A to 78C are constituted by protrusions, the connecting parts 79D to 79F are constituted by recesses, and the connecting parts 78A to 78C are fitted into the connecting parts 79D to 79F, whereby the controller 10 and the controller 20 are connected by forming an angle of 90 degrees. However, the connecting parts 78A to 78C may be constituted by recesses, and the connecting parts 79D to 79F may be constituted by protrusions.

In addition, in order to facilitate connection between the controllers, the connecting parts 78A to 78C and the connecting parts 79D to 79F may be attracted to each other by a magnetic force.

Note that, in the examples illustrated in Figs. 26 and 27, a case where the connecting parts of the controller 20 are provided at a plurality of different portions (the upper surface and the side surface) has been described. However, the connecting parts of the controller 10 may be provided at a plurality of different portions. At this time, the connection relationship between the controller 10 and the controller 20 may be altered by altering between the connecting parts of the controller 10 with which a connecting part of the controller 20 is brought into contact.

### (2.9. Guidance for Prompting Connection between Controllers)

In the above, connection examples between the controller 10 and the controller 20 have been described. For example, the timing at which the controller 10 and the controller 20 are required to be connected may be defined on the basis of the progress of the App 812. At this time, in a case where the timing at which the controller 10 and the controller 20 are required to be connected has come, the App 812 may cause the VR device 83 to display a guidance prompting connection between the controllers.

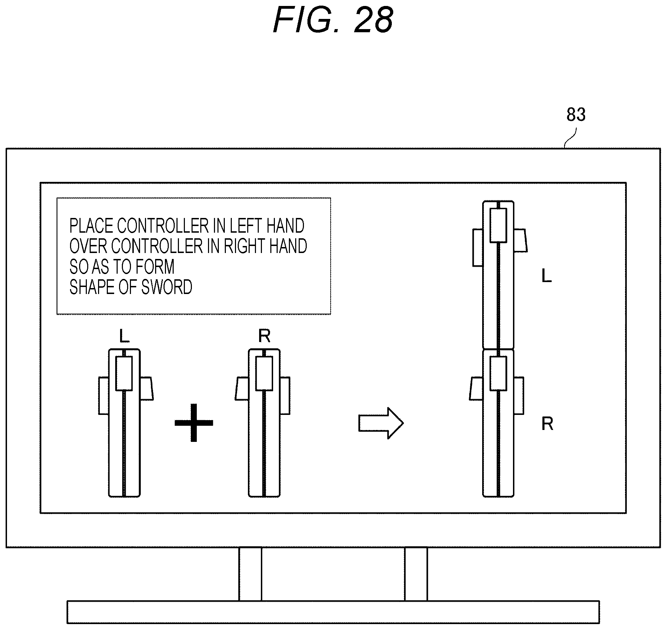

Fig. 28 is a diagram illustrating a display example of a guidance prompting connection between controllers. Referring to Fig. 28, a guidance prompting connection between controllers is displayed on the VR device 83. The guidance includes a message prompting connection between the controllers (here, the message "Place the controller in the left hand over the controller in the right hand so as to form a shape of a sword") and an image of the two controllers after connection.

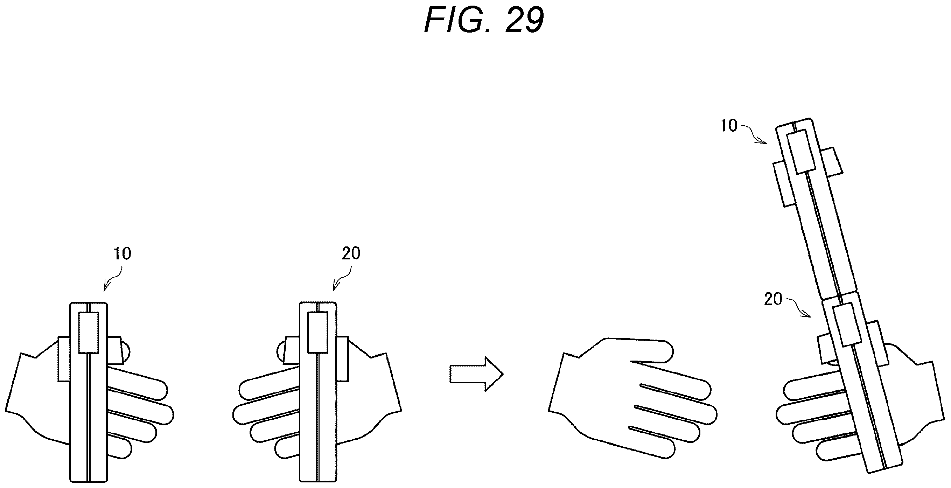

Fig. 29 is a diagram illustrating states of two controllers before and after connection in accordance with the guidance. Referring to the left half of Fig. 29, the user has the controller 10 in the left hand and has the controller 20 in the right hand. When the user places the controller 10 in the left hand over the controller 20 in the right hand in accordance with the guidance, the controller 10 is connected on top of the controller 20 as illustrated in the right half of Fig. 29.

The second embodiment of the present disclosure has been described above.

### <3. Various Modifications>

Next, various modifications will be described in detail.

### (3.1. Number of Controllers Connected to Each Other)

In the first embodiment of the present disclosure, a case where there is one controller has been mainly described, and in the second embodiment of the present disclosure, a case where there are two controllers has been mainly described. However, three or more controllers may be connected to each other. Even in such a case, connection at any portion among the three or more controllers may be made similarly to the connection between the controllers described in the second embodiment of the present disclosure.

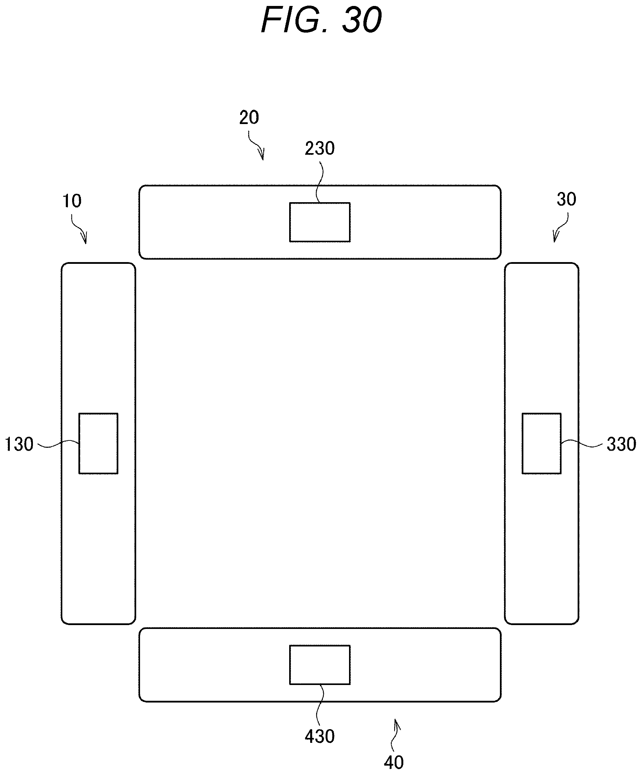

Fig. 30 is a diagram illustrating a situation in which four controllers are connected to each other. Referring to Fig. 30, the controller 10 and the controller 20 are connected, the controller 20 and a controller 30 are connected, the controller 30 and a controller 40 are connected, and the controller 40 and the controller 10 are connected. The controller 30 includes a movable part 330, and the controller 40 includes a movable part 430.

The functions that each of the controller 30 and the controller 40 has may be similar to the functions that the controller 10 has. Therefore, detailed description of the functions that each of the controller 30 and the controller 40 has will be omitted. As a specific application example, assumed cases include, for example, a case where a sense of force reproducing the sense of force given to the hand of the user when a weight moves on top of a plate located on an inner side of the controller 10 to the controller 40 is presented to the user.

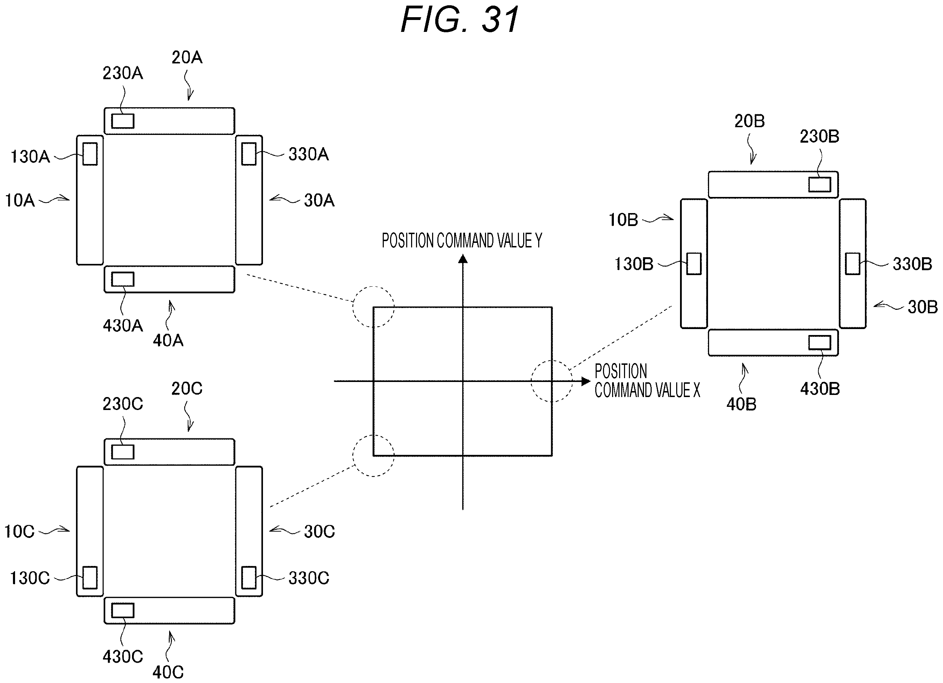

Fig. 31 is a diagram illustrating a control example of the movable parts provided in each of four controllers. Referring to Fig. 31, three patterns of combinations of the positions of the respective movable parts 130 to 430 (that is, movable parts 130A to 430A provided in the controllers 10A to 40A, movable parts 130B to 430B provided in the controllers 10B to 40B, and movable parts 130C to 430C provided in the controllers 10C to 40C) are illustrated.

In this example, the position of the movable part 230 and the position of the movable part 430 are controlled by a position command value X, and the position of the movable part 130 and the position of the movable part 330 are controlled by a position command value Y. That is, in a case where three or more controllers are connected to each other, the App 812 may give two or more-dimensional position command values to the three or more controllers. This can ensure that the sense of force to be presented to the user is controlled more finely.

### (3.2. Case where Accessory Member is Connected)

In the second embodiment of the present disclosure, a case where the controllers are connected to each other has been mainly described. However, a member (second member) connected to one controller may be a member (hereinafter, also referred to as an "accessory member") other than the controller. The accessory member can also be alternatively expressed as an "attachment".

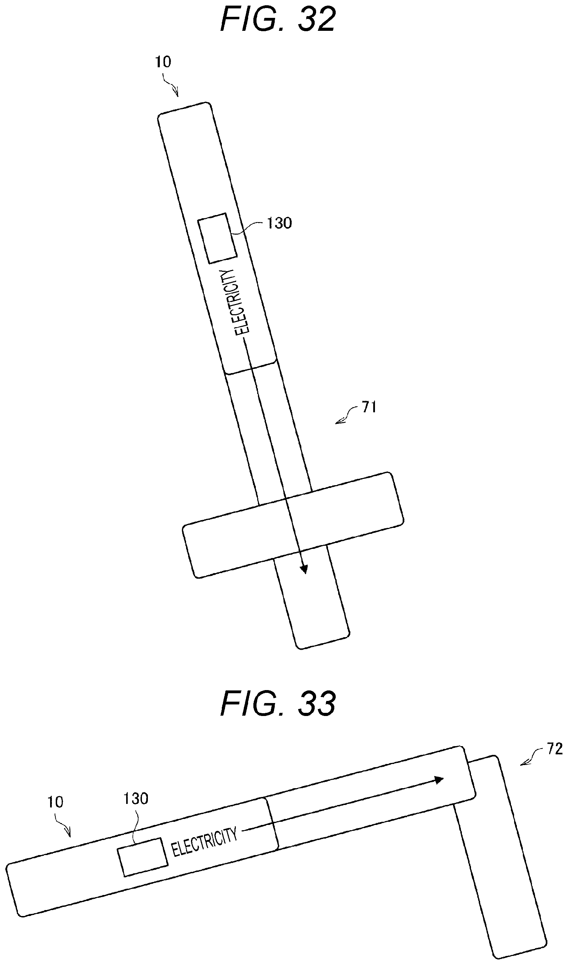

Fig. 32 is a diagram illustrating an example in which a controller and an accessory member are connected. Referring to Fig. 32, the controller 10 and an accessory member 71 are connected. The accessory member 71 is formed to simulate the shape of a grip portion of a sword, and the lower surface of the controller 10 and the accessory member 71 are connected.

As in this example, by adopting the accessory member 71 for the member grabbed by the hand of the user and arranging the controller 10 away from the grabbing position, the moment of the movable part 130 can be made larger with a slight change in the position of the movable part 130. For example, as illustrated in Fig. 32, the controller 10 may be arranged away from the grabbing position by connecting the controller 10 in the upward direction of the accessory member 71.

Note that, since the accessory member 71 does not have a function as a controller and does not include a battery, it is understood that it is usually difficult to, for example, accept an operation of pressing a button from the user or to present vibration to the user with the VCM.

However, the controller 10 includes the battery 140. Thus, the controller 10 may provide the electric power of the battery 140 to the accessory member 71. This allows the accessory member 71 to work using the electric power provided from the controller 10.

In more detail, the accessory member 71 is enabled to, for example, accept an operation of pressing a button from the user or present vibration to the user with the VCM, using the electric power provided from the controller 10. At this time, since the controller 10 and the accessory member 71 need to be electrically connected, a connecting part of each of the controller 10 and the accessory member 71 is preferably constituted by a material that transfers electricity.

Fig. 33 is a diagram illustrating another example in which a controller and an accessory member are connected. Referring to Fig. 33, the controller 10 and an accessory member 72 are connected. The accessory member 72 is formed to simulate the shape of a grip portion of a gun, and the lower surface of the controller 10 and the accessory member 72 are connected.

As in this example, by adopting the accessory member 72 for the member grabbed by the hand of the user and arranging the controller 10 away from the grabbing position, the moment of the movable part 130 can be made larger with a slight change in the position of the movable part 130. For example, as illustrated in Fig. 33, the controller 10 may be arranged away from the grabbing position by connecting the controller 10 in the upward direction of the accessory member 72.

Similarly to the example illustrated in Fig. 32, the controller 10 may provide the electric power of the battery 140 to the accessory member 72. This allows the accessory member 72 to work using the electric power provided from the controller 10. At this time, since the controller 10 and the accessory member 72 need to be electrically connected, a connecting part of each of the controller 10 and the accessory member 72 is preferably constituted by a material that transfers electricity.

As the number of types of shapes of the accessory member is expanded, the number of types of shapes to be perceived by the user can be expanded. Note that the accessory member 71 illustrated in Fig. 32 and the accessory member 72 illustrated in Fig. 33 have different shapes. These accessory member 71 and accessory member 72 may be separately prepared in advance. Alternatively, any one of the accessory member 71 and the accessory member 72 may be allowed to be optionally designed by the user rearranging the shape of tone accessory member.

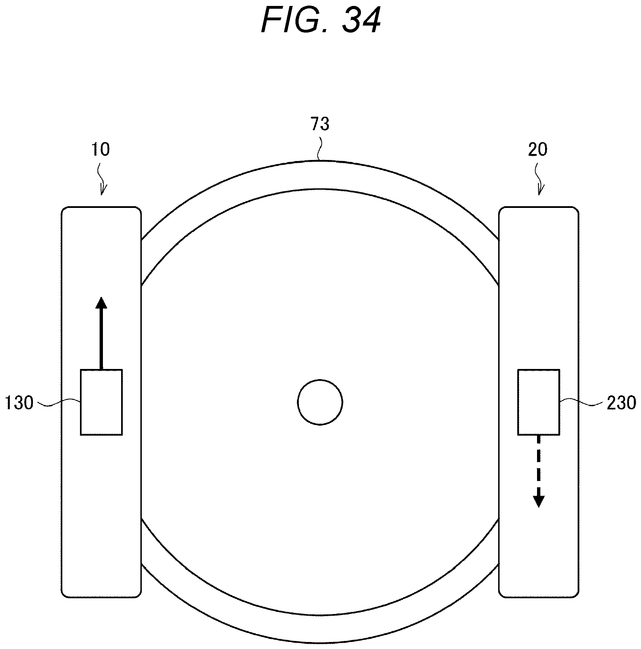

Fig. 34 is a diagram illustrating an example in which each of two controllers is connected to an accessory member. As illustrated in Fig. 34, not only the controller 10 and an accessory member 73 are connected, but also the controller 20 may be further connectable to the accessory member 73.

For example, two grooves may be formed in the accessory member 73, and the controller 10 and the controller 20 may be allowed to be inserted into the two grooves. For example, the controller 10 and the controller 20 may be connectable to the accessory member 73 in parallel. This allows the controller 10 and the controller 20 to correspond to grip portions of a steering wheel formed by the controller 10, the accessory member 73, and the controller 20.

At this time, the position of the movable part 130 and the position of the movable part 230 may be controlled according to one position command value.

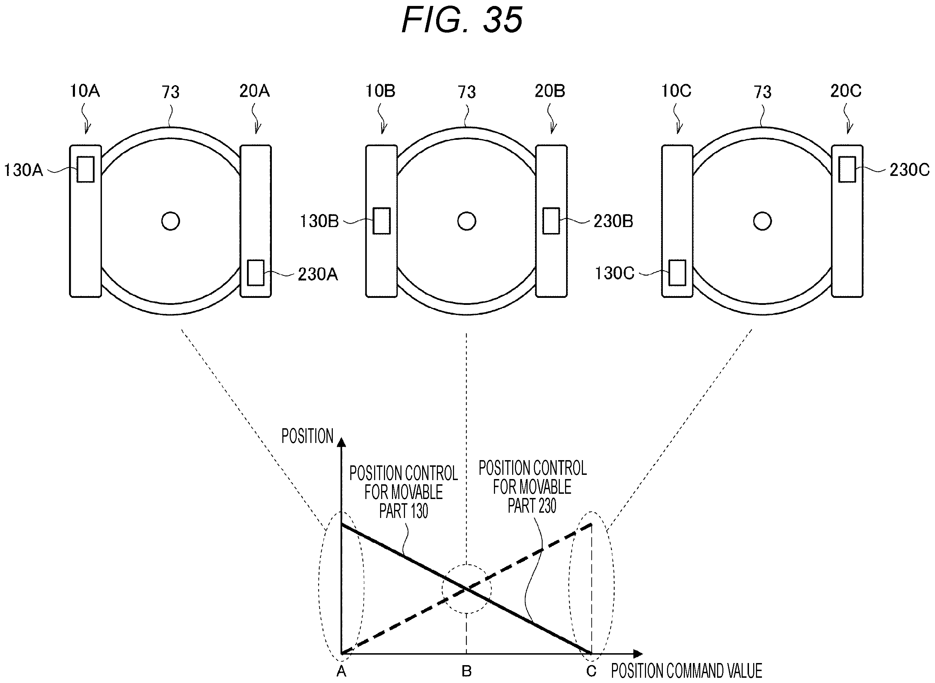

Fig. 35 is a diagram illustrating a control example of the movable parts provided in each of two controllers connected to the accessory member 73. Referring to Fig. 35, three patterns of combinations of the positions of the respective movable parts 130 and 230 (that is, the movable parts 130A and 230A provided in the controllers 10A and 20A, the movable parts 130B and 230B provided in the controllers 10B and 20B, and the movable parts 130C and 230C provided in the controllers 10C and 20C) are illustrated.

In this example, the position of the movable part 130 and the position of the movable part 230 are controlled by one position command value. Then, in accordance with the change in the position command value, the position of the movable part 130 and the position of the movable part 230 both change in its reverse ways. This can ensure that a sense of force in a direction in which the steering wheel rotates is presented to the user.

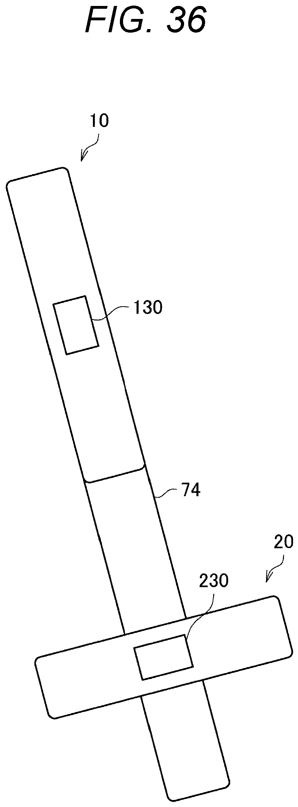

Fig. 36 is a diagram illustrating an example in which each of two controllers is connected to an accessory member. As illustrated in Fig. 36, not only the controller 10 and an accessory member 74 are connected, but also the controller 20 may be further connectable to the accessory member 74.

For example, a groove may be formed in the accessory member 74, and the controller 20 may be allowed to be inserted into the groove. For example, the controller 20 may be connectable in an orientation orthogonal to the orientation of the accessory member 74. This allows the controller 20 to, in a sword formed by the controller 10, the accessory member 74, and the controller 20, correspond to a brim portion of the sword.

At this time, while the position of the movable part 130 is controlled according to the position command value, the position of the movable part 230 does not have to be controlled according to the position command value. For example, the movable part 230 may be controlled by the App 812 to vibrate. This can ensure that a sense of force reproducing the sense of force experienced by the hand of the user when the sword is impacted is presented to the hand of the user.

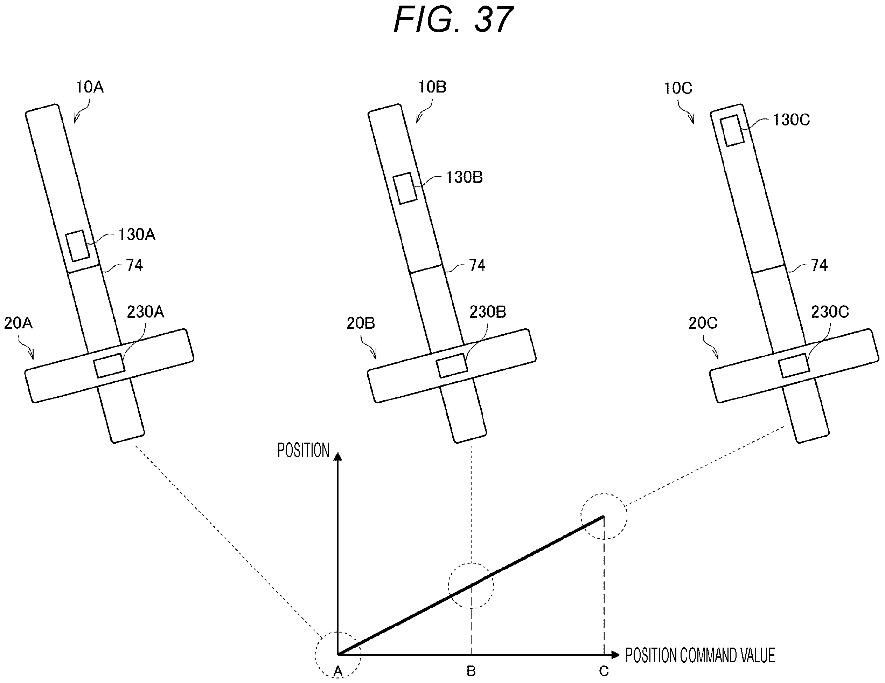

Fig. 37 is a diagram illustrating an example of a relationship between the position command value and the position of the movable part 130. Here, a case where the upward direction of the controller 10 is supposed as a positive direction of the position of the movable part 130 will be assumed.

At this time, as illustrated in Fig. 37, as the position command value becomes larger (in the order of A, B, and C), the position of the movable part 130 may change in the upward direction of the controllers 10A to 10C (in the order of the movable part 130A, the movable part 130B, and the movable part 130C) . For example, the position of the movable part 130 may linearly change with respect to the position command value. The position of the movable part 230 does not have to change on the basis of the position command value.

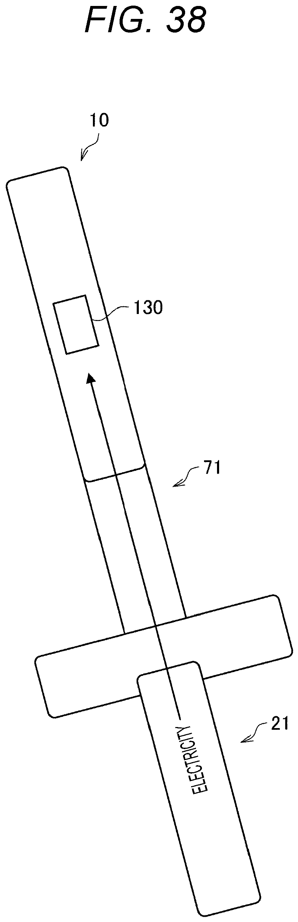

Fig. 38 is a diagram illustrating an example in which the accessory member 71 is connected to two types of controllers. Referring to Fig. 38, not only the controller 10 and the accessory member 71 are connected, but also the accessory member 71 and a controller 21 are connected. The controller 21 is a general controller having no movable part according to the embodiment of the present disclosure.

With such a connection is made, tools having diverse shapes (such as a sword and a gun as an example) can be created by altering the shape of the accessory member 71.

Furthermore, the portion to be grabbed by the hand of the user is not the accessory member 71 but the controller 21, which has a battery. Accordingly, the controller 21 can, for example, accept an operation of pressing a button from the user or present vibration to the user with the VCM. With this configuration, since it is no longer necessary to provide a battery and a button in the controller 10, a moving space of the movable part 130 is easily secured.

The controller 21 may provide electric power of the battery to the controller 10 via the accessory member 71. This allows the controller 10 to work using the electric power provided from the controller 21. In more detail, the controller 10 can move the movable part 130, using the electric power provided from the controller 21.

At this time, since the controller 10 and the accessory member 71 need to be electrically connected, a connecting part of each of the controller 10 and the accessory member 71 is preferably constituted by a material that transfers electricity. Similarly, since the controller 21 and the accessory member 71 need to be electrically connected, a connecting part of each of the controller 21 and the accessory member 71 is preferably constituted by a material that transfers electricity.

### (3.3. Modifications Relating to Movement of Movable Part)

In the above, an example in which the movable part 130 moves on a straight line has been mainly described. However, the movable part 130 does not necessarily have to move on a straight line. For example, the movable part 130 may move so as to draw a trajectory other than a straight line. Hereinafter, modifications relating to movement of the movable part 130 will be described.

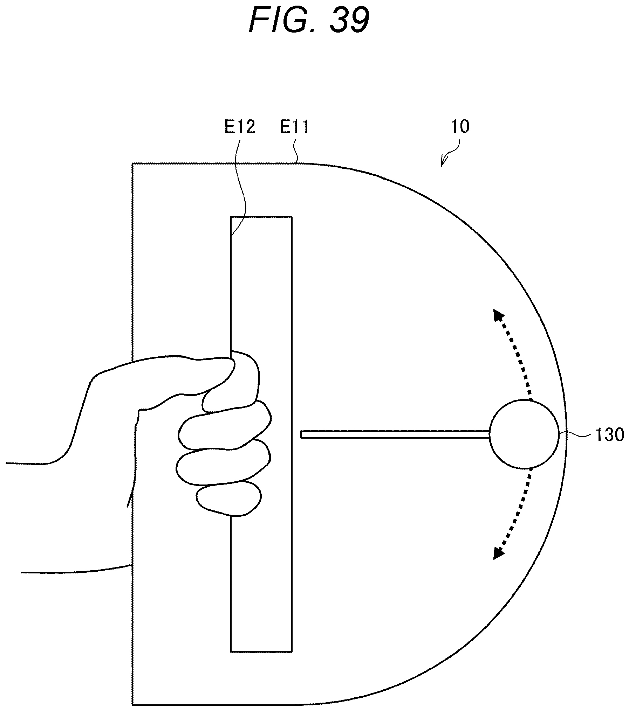

Fig. 39 is a diagram for explaining a first modification relating to movement of the movable part 130. Referring to Fig. 39, the movable part 130 is provided inside a housing E11 of the controller 10. As illustrated in Fig. 39, the position control unit 122 may change the position of the movable part 130 so as to draw a curve on the basis of the position command value. Note that the housing E11 may include a grip portion E12 to be grabbed by the hand of the user.

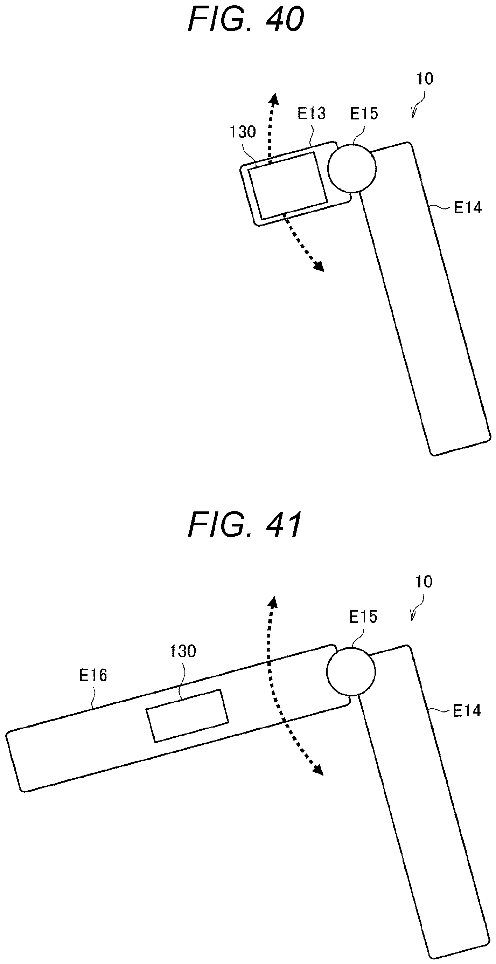

Fig. 40 is a diagram for explaining a second modification relating to movement of the movable part 130. Referring to Fig. 40, the movable part 130 is provided inside a housing E13 of the controller 10. In addition, this housing E13 is connected to a housing E14 to be grabbed by the user via a rotation shaft E15. For example, the position control unit 122 may change the position of the movable part 130 so as to draw a curve by rotating the housing E13 about the rotation shaft E15 on the basis of the position command value.

Fig. 41 is a diagram for explaining a third modification relating to movement of the movable part 130. Referring to Fig. 41, the movable part 130 is provided inside a housing E16 having an elongated shape. In addition, this housing E16 is connected to the housing E14 to be grabbed by the user via the rotation shaft E15. For example, the position control unit 122 may change the position of the movable part 130 so as to draw a curve by rotating the housing E16 about the rotation shaft E15 on the basis of the position command value.

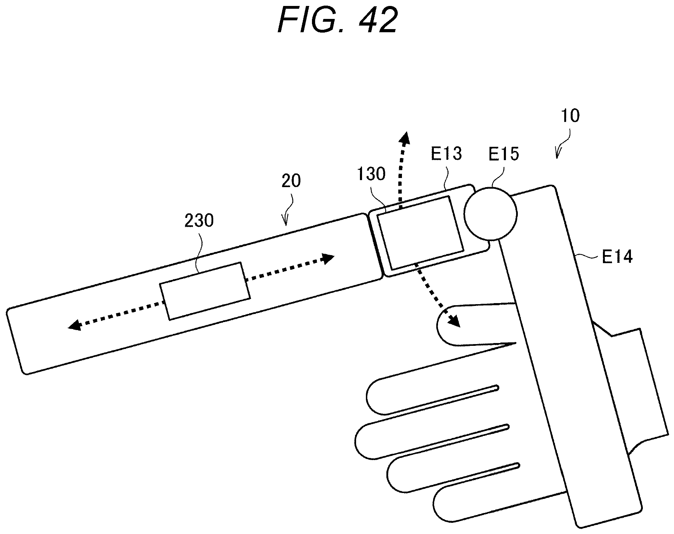

Fig. 42 is a diagram for explaining a fourth modification relating to movement of the movable part 130. Referring to Fig. 42, the controller 10 according to the second modification illustrated in Fig. 40 is illustrated. In addition, Fig. 42 also illustrates the controller 20 according to the second embodiment of the present disclosure, and the housing E13 of the controller 10 and the controller 20 are connected.

For example, the position control unit 122 may change the position of the movable part 130 so as to draw a curve by rotating the housing E13 about the rotation shaft E15 on the basis of the position command value. This ensures that the position of the movable part 230 provided in the controller 20 also changes so as to draw a curve.

Furthermore, different types of tools can be created according to the rotation angle of the housing E13 about the rotation shaft E15. For example, in the example illustrated in Fig. 42, a tool having the shape of a gun is created. However, the position control unit 122 can rotate the housing E13 such that the housing E14 and the housing E13 are aligned on a straight line, whereby a tool having the shape of a sword is created.

### (3.4. Configuration Examples of Movable Part)

Next, configuration examples of the movable part 130 will be described.

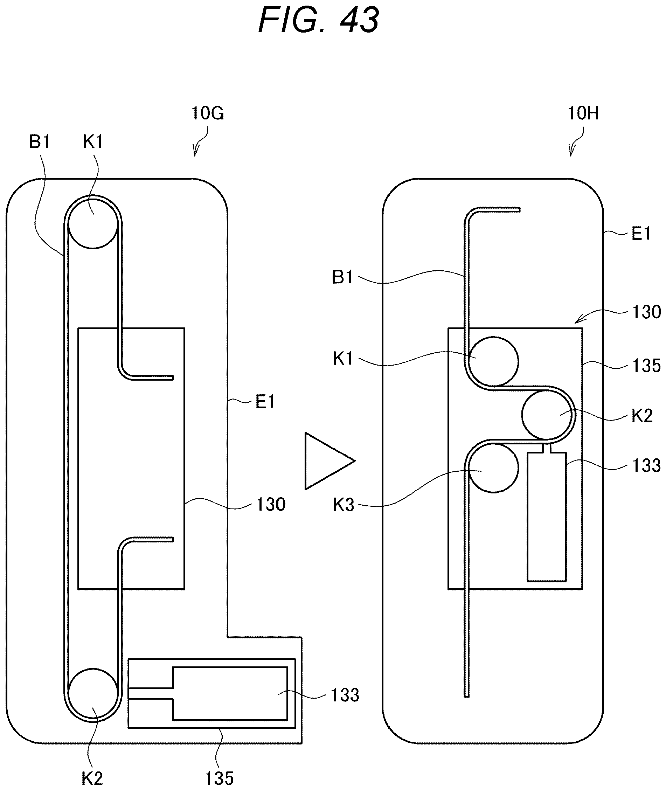

Fig. 43 is a diagram for explaining a first configuration example of the movable part 130. Referring to Fig. 43, a controller 10G as an example of the controller 10 is illustrated. The controller 10G is provided with the movable part 130 and a substrate 135. The motor 133 is disposed on the substrate 135. That is, the motor 133 exists outside the movable part 130.

In addition, the controller 10G is provided with a pulley K1, a pulley K2, and a belt B1. The movable part 130 is connected to two ends of the belt B1. In addition, the pulley K1 and the pulley K2 are in contact with the same side of the belt B1 and are fixed to the housing E1. In this situation, when the motor 133 applies a rotational drive force to the pulley K2, the belt B1 moves while being in contact with the pulley K1 and the pulley K2 along with the rotation of the pulley K2, and the movable part 130 connected to the belt B1 moves in the vertical direction.

However, in this example, the motor 133, which is a main heavy object, exists outside the movable part 130. Therefore, since the weight ratio of the movable part 130 to the total weight of the controller 10G as a reference is not so high, it is hard to improve the quality of the sense of force to be presented to the user.

Referring to Fig. 43, a controller 10H as an example of the controller 10 is also illustrated. The controller 10H is provided with the substrate 135, and the motor 133 is provided in the movable part 130. The substrate 135 and the motor 133 are included in the movable part 130. Furthermore, a battery may also be disposed on the substrate 135. At this time, the battery is also included in the movable part 130.

In addition, the controller 10H is provided with pulleys K1 to K3 and a belt B1. Two ends of the belt B1 are connected to the housing E1. In addition, the pulley K1 and the pulley K3, and the pulley K2 are in contact with opposite sides of the belt B1, and the pulleys K1 to K3 are connected to the movable part 130.

In this situation, when the motor 133 applies a rotational drive force to the pulley K2, the pulleys K1 to K3 move while being in contact with the belt B1 along with the rotation of the pulley K2, and the movable part 130 connected to the pulleys K1 to K3 moves in the vertical direction.

In this example, the motor 133 and the battery exist inside the movable part 130. Therefore, since the weight ratio of the movable part 130 to the total weight of the controller 10H as a reference is raised, the quality of the sense of force to be presented to the user is improved.

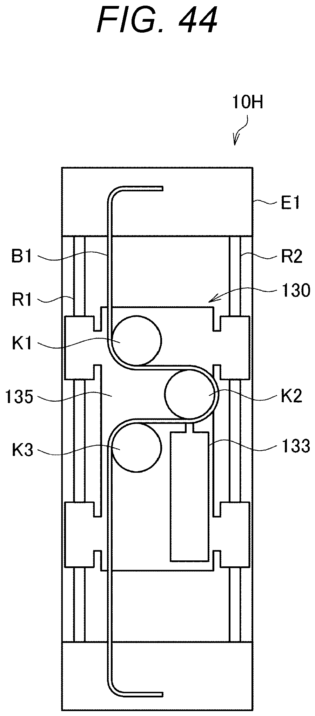

Fig. 44 is a diagram for explaining details of the first configuration example of the movable part 130. Referring to Fig. 44, a rail R1 and a rail R2 are fixed to the housing E1, and the movable part 130 is configured such that the movable part 130 is allowed to move on these rail R1 and rail R2. Note that, in the example illustrated in Fig. 44, the substrate 135 has one layer, but the substrate 135 may be divided into a plurality of layers. Then, the plurality of layers may be configured to overlap each other.

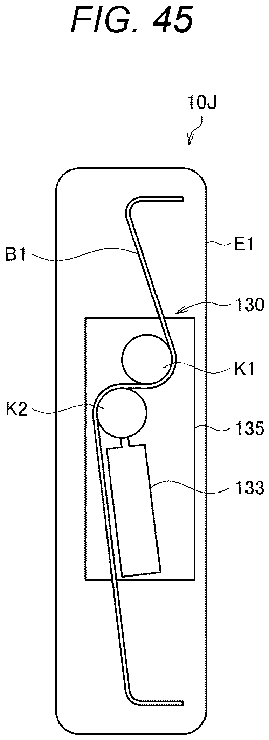

Fig. 45 is a diagram for explaining a second configuration example of the movable part 130. Referring to Fig. 45, a controller 10J as an example of the controller 10 is illustrated. The controller 10J is provided with the substrate 135, and the motor 133 is disposed on the substrate 135. The substrate 135 and the motor 133 are included in the movable part 130. Furthermore, a battery may also be disposed on the substrate 135. At this time, the battery is also included in the movable part 130.

In addition, the controller 10J is provided with pulleys K1 and K2 and a belt B1. Two ends of the belt B1 are connected to the housing E1. In addition, the pulley K1 and the pulley K2 are in contact with opposite sides of the belt B1, and the pulley K1 to the pulley K2 are connected to the movable part 130.

In this situation, when the motor 133 applies a rotational drive force to the pulley K2, the pulley K1 and the pulley K2 move while being in contact with the belt B1 along with the rotation of the pulley K2, and the movable part 130 connected to the pulley K1 and the pulley K2 moves in the vertical direction.

Also in this example, the motor 133 and the battery exist inside the movable part 130. Therefore, since the weight ratio of the movable part 130 to the total weight of the controller 10J as a reference is raised, the quality of the sense of force to be presented to the user is improved.

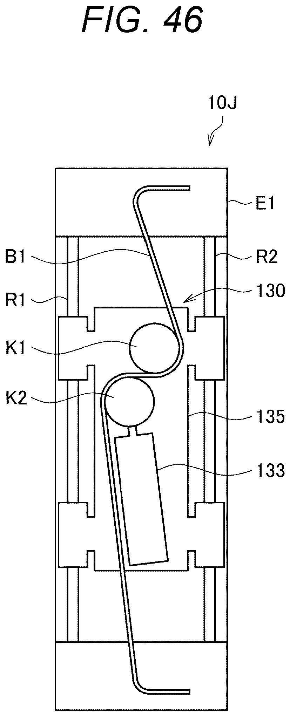

Fig. 46 is a diagram for explaining details of the second configuration example of the movable part 130. Referring to Fig. 46, a rail R1 and a rail R2 are fixed to the housing E1, and the movable part 130 is configured such that the movable part 130 is allowed to move on these rail R1 and rail R2. Note that, in the example illustrated in Fig. 46, the substrate 135 has one layer, but the substrate 135 may be divided into a plurality of layers. Then, the plurality of layers may be configured to overlap each other.

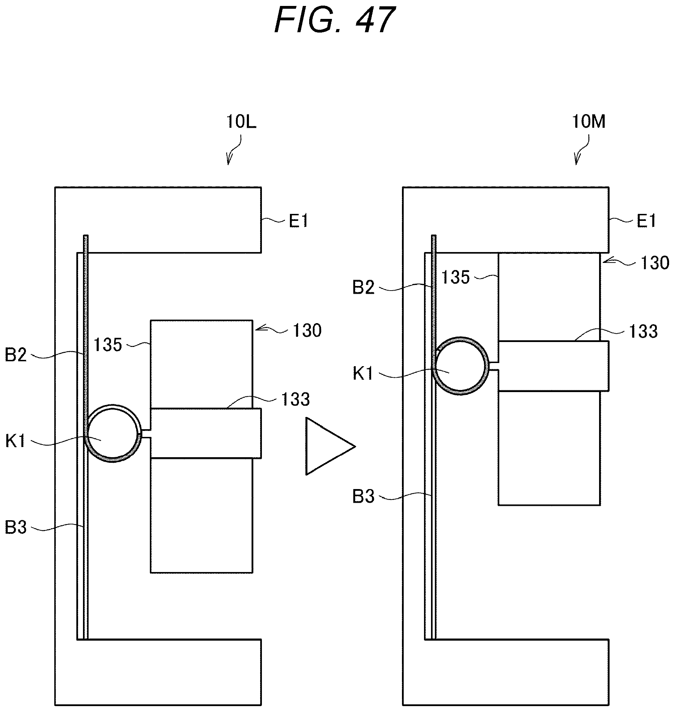

Fig. 47 is a diagram for explaining a third configuration example of the movable part 130. Referring to Fig. 47, a controller 10L as an example of the controller 10 is illustrated. The controller 10L is provided with the substrate 135, and the motor 133 is disposed on the substrate 135. The substrate 135 and the motor 133 are included in the movable part 130. Furthermore, a battery may also be disposed on the substrate 135. At this time, the battery is also included in the movable part 130.

In addition, the controller 10L is provided with a pulley K1, a belt B2, and a belt B3. One end of the belt B2 is connected to the housing E1, and another end is connected to the pulley K1. In addition, one end of the belt B3 is connected to the housing E1, and another end is connected to the pulley K1. The belt B2 and the belt B3 are wound around the pulley K1 in opposite turns.

In this situation, when the motor 133 applies a rotational drive force (for example, a rotational drive force in a counterclockwise turn when viewed from above the paper surface) to the pulley K1, the amount of winding of the belt B2 around the pulley K1 increases, the amount of winding of the belt B3 around the pulley K1 decreases, and the pulley K1 rises along with the rotation of the pulley K1, while the movable part 130 connected to the pulley K1 moves in the upward direction. A controller 10M is a controller after the movable part 130 moves in the upward direction.

When the motor 133 applies a rotational drive force (for example, a rotational drive force in a clockwise turn when viewed from above the paper surface) to the pulley K1, the amount of winding of the belt B2 around the pulley K1 decreases, the amount of winding of the belt B3 around the pulley K1 increases, and the pulley K1 descends along with the rotation of the pulley K1, while the movable part 130 connected to the pulley K1 moves in the downward direction.

Also in this example, the motor 133 and the battery exist inside the movable part 130. Therefore, since the weight ratio of the movable part 130 to the total weight of the controller 10L as a reference is raised, the quality of the sense of force to be presented to the user is improved.

### <4. Summary>

According to an embodiment of the present disclosure, there is provided an information processing apparatus including: a first member provided with a first movable part; a second member connected to the first member; a signal acquisition unit that acquires a first control signal for controlling a position of the first movable part; and a position control unit that controls the position of the first movable part in accordance with the first control signal. According to such a configuration, more types of senses of force can be presented to the user.

While the preferred embodiments of the present disclosure have been described above in detail with reference to the accompanying drawings, the technical scope of the present disclosure is not limited to such examples. It is obvious that those with ordinary skill in the technical field of the present disclosure can conceive various altered examples or corrected examples within the scope of the technical idea recited in the claims, and it is naturally construed that they also fall within the technical scope of the present disclosure.

In addition, the effects described in the present description are merely exemplary or illustrative, and are not restrictive. In other words, the technology according to the present disclosure can produce other effects that are apparent to those skilled in the art from the description of the present description, in combination with or instead of the effects described above.

Note that the configurations as described below also fall within the technical scope of the present disclosure.
(1) An information processing apparatus including:
   a first member provided with a first movable part;
   a second member connected to the first member;
   a signal acquisition unit that acquires a first control signal for controlling a position of the first movable part; and
   a position control unit that controls the position of the first movable part in accordance with the first control signal.
(2) The information processing apparatus according to (1) above, in which
   the second member is provided with a second movable part, and
   the position control unit controls a position of the second movable part in accordance with the first control signal or a second control signal different from the first control signal.
(3) The information processing apparatus according to (2) above, in which
   a combination in position control of the first movable part and the second movable part is different according to a connection relationship between the first member and the second member.
(4) The information processing apparatus according to (3) above, in which
   the connection relationship includes an angle between the first member and the second member, and
   the combination is determined on the basis of the angle.
(5) The information processing apparatus according to (4) above, in which
   in a case where the angle between the first member and the second member is a predetermined angle or smaller, the position of the first movable part is controlled on the basis of the first control signal, and the position of the second movable part is controlled on the basis of the second control signal.
(6) The information processing apparatus according to (4) above, in which
   in a case where the angle between the first member and the second member is larger than a predetermined angle, both of the position of the first movable part and the position of the second movable part are controlled on the basis of the first control signal.
(7) The information processing apparatus according to any one of (1) to (6) above, in which
   the position of the first movable part is controlled on the basis of a predetermined parameter of a first virtual object corresponding to the first member.
(8) The information processing apparatus according to (7) above, in which
   the predetermined parameter includes a size or a weight of the virtual object, and
   the position of the first movable part is controlled so as to be farther away from a grabbing position of the first member as the size or the weight is larger.
(9) The information processing apparatus according to any one of (1) to (6) above, in which
   the position of the first movable part is controlled on the basis of progress of an application.
(10) The information processing apparatus according to (9) above, in which
   the position of the first movable part changes on the basis of contact made between a first virtual object corresponding to the first member and a second virtual object in the application.
(11) The information processing apparatus according to any one of (1) to (10) above, in which
   the first member and the second member are directly connected.
(12) The information processing apparatus according to any one of (1) to (10) above, in which
   the first member and the second member are indirectly connected via another member.
(13) The information processing apparatus according to any one of (3) to (6) above, in which
   the connection relationship is recognized on the basis of sensor data.
(14) The information processing apparatus according to (13) above, in which
   the sensor data includes acceleration measured by acceleration sensors provided in the first member and the second member, or an image captured by a camera.
(15) The information processing apparatus according to any one of (1) to (14) above, in which
   one of the first member and the second member includes a controller that transmits operation information for controlling execution of an application, and
   the other of the first member and the second member works using electric power supplied from the controller.
(16) The information processing apparatus according to any one of (1) to (15) above, in which
   the first movable part is configured such that the first movable part is allowed to move to an outside of a housing of the first member.
(17) The information processing apparatus according to any one of (1) to (16) above, in which
   the first movable part includes a motor.
(18) The information processing apparatus according to any one of (1) to (17) above, in which
   the first movable part includes a battery.
(19) An information processing method including:
   acquiring a first control signal for controlling a position of a first movable part provided in a first member connected to a second member; and
   controlling, by a processor, the position of the first movable part in accordance with the first control signal.
(20) A program for causing
   a computer to function as an information processing apparatus including:
   a signal acquisition unit that acquires a first control signal for controlling a position of a first movable part provided in a first member connected to a second member; and
   a position control unit that controls the position of the first movable part in accordance with the first control signal.

### REFERENCE SIGNS LIST

1, 2 Information processing system
10, 20Controller
120, 220 Microcomputer
121, 221 Signal acquisition unit
122, 222 Position control unit
130, 230 Movable part
131, 231 Home seek switch
132, 232 Motor driver
133, 233 Motor
134, 234 Encoder
135 Substrate
140, 240 Battery
151, 251 Amp
152, 252 VCM
161 Various buttons
162 Trigger button
163 Drive member
71 to 74 Accessory member
77 Joint

## Claims

1. An information processing apparatus comprising:
a first member provided with a first movable part;
a second member connected to the first member;
a signal acquisition unit that acquires a first control signal for controlling a position of the first movable part; and
a position control unit that controls the position of the first movable part in accordance with the first control signal.

2. The information processing apparatus according to claim 1, wherein
the second member is provided with a second movable part, and
the position control unit controls a position of the second movable part in accordance with the first control signal or a second control signal different from the first control signal.

3. The information processing apparatus according to claim 2, wherein
a combination in position control of the first movable part and the second movable part is different according to a connection relationship between the first member and the second member.

4. The information processing apparatus according to claim 3, wherein
the connection relationship includes an angle between the first member and the second member, and
the combination is determined on a basis of the angle.

5. The information processing apparatus according to claim 4, wherein
in a case where the angle between the first member and the second member is a predetermined angle or smaller, the position of the first movable part is controlled on a basis of the first control signal, and the position of the second movable part is controlled on a basis of the second control signal.

6. The information processing apparatus according to claim 4, wherein
in a case where the angle between the first member and the second member is larger than a predetermined angle, both of the position of the first movable part and the position of the second movable part are controlled on a basis of the first control signal.

7. The information processing apparatus according to claim 1, wherein
the position of the first movable part is controlled on a basis of a predetermined parameter of a first virtual object corresponding to the first member.

8. The information processing apparatus according to claim 7, wherein
the predetermined parameter includes a size or a weight of the virtual object, and
the position of the first movable part is controlled so as to be farther away from a grabbing position of the first member as the size or the weight is larger.

9. The information processing apparatus according to claim 1, wherein
the position of the first movable part is controlled on a basis of progress of an application.

10. The information processing apparatus according to claim 9, wherein
the position of the first movable part changes on a basis of contact made between a first virtual object corresponding to the first member and a second virtual object in the application.

11. The information processing apparatus according to claim 1, wherein
the first member and the second member are directly connected.

12. The information processing apparatus according to claim 1, wherein
the first member and the second member are indirectly connected via another member.

13. The information processing apparatus according to claim 3, wherein
the connection relationship is recognized on a basis of sensor data.

14. The information processing apparatus according to claim 13, wherein
the sensor data includes acceleration measured by acceleration sensors provided in the first member and the second member, or an image captured by a camera.

15. The information processing apparatus according to claim 1, wherein
one of the first member and the second member includes a controller that transmits operation information for controlling execution of an application, and
the other of the first member and the second member works using electric power supplied from the controller.

16. The information processing apparatus according to claim 1, wherein
the first movable part is configured such that the first movable part is allowed to move to an outside of a housing of the first member.

17. The information processing apparatus according to claim 1, wherein
the first movable part includes a motor.

18. The information processing apparatus according to claim 1, wherein
the first movable part includes a battery.

19. An information processing method comprising:
acquiring a first control signal for controlling a position of a first movable part provided in a first member connected to a second member; and
controlling, by a processor, the position of the first movable part in accordance with the first control signal.

20. A program for causing
a computer to function as an information processing apparatus comprising:
a signal acquisition unit that acquires a first control signal for controlling a position of a first movable part provided in a first member connected to a second member; and
a position control unit that controls the position of the first movable part in accordance with the first control signal.
